# EUROPEAN PATENT APPLICATION

(11) **EP 4 845 282 A1**
(43) Date of publication of application: **25.11.2026**
(21) Application number: 24923442.8
(22) Date of filing: 11.11.2024
(51) Int. Cl.: H04W 72/56

(54) **COMMUNICATION METHOD AND COMMUNICATION APPARATUS**

(30) Priority: 08.02.2024 CN 202410178016
(71) Applicant: Huawei Technologies Co., Ltd., Shenzhen, Guangdong 518129 (CN)
(72) Inventor: WANG, Jun, Shenzhen, Guangdong 518129 (CN); PENG, Chenghui, Shenzhen, Guangdong 518129 (CN); ZHANG, Kuan, Shenzhen, Guangdong 518129 (CN)
(74) Representative: Huawei European IPR
(86) International application number: PCT/CN2024/131248
(87) International publication number: WO 2025/167238

(57) **Abstract**

This application provides a communication method and a communication apparatus. In the method, a service instance that needs to be preferentially transmitted and/or computed by using a resource is determined based on one or more pieces of priority information of a plurality of service instances, including: a priority of each of a plurality of service types, a priority of each of a plurality of service layers, a priority of each of a plurality of service modules, and a priority of each of a plurality of service instances. In this way, the resource can be appropriately allocated, and differentiated processing can be performed on the plurality of services, thereby improving resource utilization. In addition, in the method, a first resource can be further allocated, based on a correspondence indicated by mapping relationship information, to a service instance of a corresponding service type and/or service layer and/or service module and/or service instance. This avoids preemption of the resource by other service instances and enables appropriate resource allocation, thereby improving resource utilization.

## Description

This application claims priority to Chinese Patent Application No. 202410178016.5, filed with the China National Intellectual Property Administration on February 8, 2024 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

In conventional communication technologies, a network device provides a connection service for terminal devices, that is, the network device provides only a data transmission service for the terminal devices.

With the development of communication technologies, services provided by the network device for terminal devices are no longer limited to the connection service. For example, non-connection services with features such as a computing service, a data processing service, an artificial intelligence (artificial intelligence, AI) service, and a sensing service also become part of the service portfolio of the network device.

When transmitting data of both the non-connection service and the connection service, a communication resource needs to be allocated to the data. In addition, when computing data of the non-connection service and the connection service, a computing resource also needs to be allocated to the data. However, during resource allocation, a plurality of services may preempt the same resource, resulting in reduced resource utilization.

Therefore, how to appropriately allocate a resource to improve resource utilization needs to be urgently resolved.

### SUMMARY

This application provides a communication method and a communication apparatus, to appropriately allocate a resource and improve resource utilization.

According to a first aspect, a communication method is provided. The method includes: determining at least one first service instance from a plurality of service instances based on priority information, where a service type of the plurality of service instances includes a non-connection service type, the priority information indicates priorities of a service parameter of the plurality of service instances, and the service parameter includes at least one of the following: a service type, a service layer, a service module, a service instance identifier, and a resource scheduling grant; and using a first resource to process the at least one first service instance, where the first resource is a resource allowed to be used to process the plurality of service instances, and the processing includes transmission and/or computing.

A non-connection service is a service other than a service that a network device provides a data transmission service for a first communication apparatus, for example, a computing service, a data processing service, an AI service, or a sensing service.

Based on the foregoing solution, when one resource needs to transmit and/or compute the plurality of service instances, the resource can be used to determine a service that needs to be transmitted and/or computed by using the resource, based on one or more pieces of priority information of the plurality of service instances, including: a priority of each of a plurality of service types, a priority of each of a plurality of service layers, a priority of each of a plurality of service modules, and a priority of each of a plurality of service instances. In other words, the first resource is used to process a first service instance, so that the resource can be appropriately allocated, and differentiated processing can be performed on a plurality of services, thereby improving resource utilization.

With reference to the first aspect, in some implementations of the first aspect, the method further includes: determining the plurality of service instances based on mapping relationship information and the first resource, where the mapping relationship information indicates a mapping relationship between a plurality of service parameters and a plurality of resources, and the service parameter of the plurality of service instances is a service parameter indicated by the mapping relationship information and corresponding to the first resource.

Based on the foregoing solution, the resource can be allocated, based on a correspondence indicated by the mapping relationship information, to the first service instance corresponding to the resource, where the first service instance is a service instance dedicated to the resource. In other words, the first resource is allocated to the first service instance of a corresponding service type and/or service layer and/or service module and/or service instance. This avoids preemption of the resource by other service instances and enables appropriate resource allocation, thereby improving resource utilization.

With reference to the first aspect, in some implementations of the first aspect, the mapping relationship information is indicated by the network device, or the mapping relationship information is predefined in a protocol.

With reference to the first aspect, in some implementations of the first aspect, the resource includes at least one of the following: a transmission resource or a computing resource.

Based on the foregoing solution, the resource may be the transmission resource, an RF resource, or the computing resource, so that resource allocation of any combination of the transmission resource and the computing resource can be subsequently performed, and a resource allocation manner is more flexible.

With reference to the first aspect, in some implementations of the first aspect, the service type of the plurality of services includes the non-connection service type, and the non-connection service type includes at least one of the following: a network computing service type, a network data processing service type, a network AI service type, or a network sensing service type.

Based on the foregoing solution, the non-connection service type includes one or more of the network computing service type, the network data processing service type, the network AI service type, and the network sensing service type, so that resource allocation can be performed for services of a plurality of service types, and the resource allocation manner is more flexible.

With reference to the first aspect, in some implementations of the first aspect, when the resource is the transmission resource, the service instance identifier is an identifier of a data radio bearer (data radio bearer, DRB) carrying a service instance.

With reference to the first aspect, in some implementations of the first aspect, determining a first service instance set from the plurality of service instances in descending order of priorities of service types, where the first service instance set includes a plurality of service instances; determining a second service instance set from the first service instance set in descending order of priorities of service layers, where the second service instance set includes a plurality of service instances; determining a third service instance set from the second service instance set in descending order of priorities of service modules, where the third service instance set includes a plurality of service instances; and determining the at least one first service instance from the third service instance set in descending order of priorities of service instance identifiers.

Based on the foregoing solution, when the resource needs to transmit and/or compute the plurality of service instances, it may be determined, based on a combination of priorities of the plurality of service instances, priorities of service layers to which the plurality of service instances belong, priorities of service modules to which the plurality of service instances belong, and priorities of service types of the plurality of service instances, that the resource needs to transmit and/or compute the first service instance, so that differentiated processing can be performed on the plurality of service instances, thereby improving resource utilization.

With reference to the first aspect, in some implementations of the first aspect, determining the at least one first service instance from the plurality of service instances based on the priority information includes: determining the at least one first service instance from the plurality of service instances in descending order of priorities of service types to which the plurality of service instances belong.

Based on the foregoing solution, the at least one first service instance can be determined from the plurality of service instances in descending order of the priorities of the service types to which the service instances belong. In other words, the service instances can be sequentially allocated to the first resource in descending order of the priorities of the service types to which the service instances belong, until the first resource is fully occupied or the plurality of service instances are exhausted, so that the first resource is appropriately allocated, thereby improving resource utilization.

With reference to the first aspect, in some implementations of the first aspect, determining the at least one first service instance from the plurality of service instances based on the priority information includes: determining the at least one first service instance from the plurality of service instances in descending order of priorities of service layers to which the plurality of service instances belong.

Based on the foregoing solution, the at least one first service instance can be determined from the plurality of service instances in descending order of the priorities of the service layers to which the service instances belong. In other words, the service instances can be sequentially allocated to the first resource in descending order of the priorities of the service layers to which the service instances belong, until the first resource is fully occupied or the plurality of service instances are exhausted, so that the first resource is appropriately allocated, thereby improving resource utilization.

With reference to the first aspect, in some implementations of the first aspect, determining the at least one first service instance from the plurality of service instances based on the priority information includes: determining the at least one first service instance from the plurality of service instances in descending order of priorities of service modules to which the plurality of service instances belong.

Based on the foregoing solution, the at least one first service instance can be determined from the plurality of service instances in descending order of the priorities of the service modules to which the service instances belong. In other words, the service instances can be sequentially allocated to the first resource in descending order of the priorities of the service modules to which the service instances belong, until the first resource is fully occupied or the plurality of service instances are exhausted, so that the first resource is appropriately allocated, thereby improving resource utilization.

With reference to the first aspect, in some implementations of the first aspect, determining the at least one first service instance from the plurality of service instances based on the priority information includes: determining the at least one first service instance from the plurality of service instances in descending order of priorities of service instance identifiers of the plurality of service instances.

Based on the foregoing solution, the at least one first service instance can be determined from the plurality of service instances in descending order of the priorities of the service instances. In other words, the service instances can be sequentially allocated to the first resource in descending order of the priorities of the service instances, until the first resource is fully occupied or the plurality of service instances are exhausted, so that the first resource is appropriately allocated, thereby improving resource utilization.

With reference to the first aspect, in some implementations of the first aspect, when the service parameter includes resource scheduling, a priority of each resource scheduling is determined based on a first priority corresponding to the resource scheduling, and the first priority of each resource scheduling is a highest priority in service instance priorities of at least one service instance corresponding to the resource scheduling.

With reference to the first aspect, in some implementations of the first aspect, a priority of each grant in a plurality of resource scheduling grants is determined based on a highest service instance priority of the at least one service instance corresponding to the grant.

Based on the foregoing solution, when the first resource is the RF resource, the at least one first service instance can be determined from the plurality of service instances in descending order of priorities of grants to which the plurality of service instances belong. A priority of a grant is determined based on a service instance having a highest priority in the at least one service instance. In other words, the service instances can be sequentially allocated to the first resource in descending order of the priorities of the grants, until the first resource is fully occupied or the plurality of service instances are exhausted, so that the first resource is appropriately allocated, thereby improving resource utilization.

With reference to the first aspect, in some implementations of the first aspect, determining the at least one first service instance from the plurality of service instances based on the priority information includes: when the plurality of service instances include a plurality of second service instances whose service parameter has same priorities, randomly selecting at least one service instance from the plurality of second service instances as the first service instance.

Based on the foregoing solution, when the priorities of the service types to which the service instances belong are the same, the priorities of the service layers to which the service instances belong are the same, the priorities of the service modules to which the service instances belong are the same, and the priorities corresponding to the service instance identifiers are the same, the service instances with the same priorities can be randomly processed. In other words, the at least one service instance is randomly selected from the plurality of second service instances with the same priority as the first service instance, so that the resource can be appropriately allocated, thereby improving resource utilization.

With reference to the first aspect, in some implementations of the first aspect, the priority information is specified in a protocol, or the priority information is indicated by the network device.

With reference to the first aspect, in some implementations of the first aspect, the plurality of service instances are service instances in the first service instance set, and the first service instance set is predefined in a protocol, or the first service instance set is indicated by the network device.

Based on the foregoing solution, the plurality of service instances are service instances indicated by the network device or predefined in the protocol. In other words, the method is performed for a plurality of allowed service instances, thereby ensuring effectiveness and reliability of a communication system.

With reference to the first aspect, in some implementations of the first aspect, when the priority information indicates the priority of each of the plurality of service types, determining the first service instance from the plurality of service instances based on the priority information includes: the priority information is used to determine the priority of the service type of each of the plurality of service instances and determine the first service instance from the plurality of service instances, where a priority of a service type of the first service instance ranks within first s positions in descending order of the priorities of the service types of the plurality of service instances, and s≥1.

Based on the foregoing solution, when the resource needs to transmit and/or compute the plurality of service instances, the first service instance of a service type whose priority is highest or whose priority is within first s position is allocated, based on the priorities of the plurality of service types, to the first resource for transmission and/or computation, so that differentiated processing can be performed on the plurality of services, thereby improving resource utilization.

With reference to the first aspect, in some implementations of the first aspect, when the priority information indicates the priority of each of the plurality of service layers, determining the first service instance from the plurality of service instances based on the priority information includes: the priority information is used to determine the priority of the service layer of each of the plurality of service instances and determine the first service instance from the plurality of service instances, where a priority of a service layer to which the first service instance belongs ranks within first t positions in descending order of the priorities of the service layers to which the plurality of service instances belong, and t≥1.

Based on the foregoing solution, when the resource needs to transmit and/or compute the plurality of services, the first service of a service layer whose priority is highest or whose priority is within first t positions is allocated, based on the priorities of the plurality of service layers, to the first resource for transmission and/or computation, so that differentiated processing can be performed on the plurality of services, thereby improving resource utilization.

With reference to the first aspect, in some implementations of the first aspect, when the priority information indicates the priority of each of the plurality of service modules, determining the first service instance from the plurality of service instances based on the priority information includes: the priority information is used to determine the priority of the service module of each of the plurality of service instances and determine the first service instance from the plurality of service instances, where a priority of a service module of the first service instance ranks within first p positions in descending order of the priorities of the service modules of the plurality of service instances, and p≥1.

With reference to the first aspect, in some implementations of the first aspect, when the priority information indicates the priority of each of the plurality of service instances, determining the first service instance from the plurality of service instances based on the priority information includes: the priority information is used to determine the priority of each of the plurality of service instances and determine the first service instance from the plurality of service instances, where a priority of the first service instance ranks within first z positions in descending order of the priorities of the plurality of service instances, and z≥1.

Based on the foregoing solution, when the resource needs to transmit and/or compute the plurality of services, the first service whose priority is highest or whose priority is within first z positions is allocated, based on the priorities of the plurality of services, to the first resource for transmission and/or computation, so that differentiated processing can be performed on the plurality of services, thereby improving resource utilization.

With reference to the first aspect, in some implementations of the first aspect, a priority of each grant in a plurality of resource scheduling grants is determined based on a service instance, with a highest priority, of the at least one first service instance corresponding to the grant.

With reference to the first aspect, in some implementations of the first aspect, when the priority information indicates the priority of each of the plurality of resource scheduling grants and the resource is a radio frequency RF resource, determining the first service instance from the plurality of service instances based on the priority information includes: sorting the plurality of service instances in descending order of the priorities of the grants based on the priority information, and determining the first service instance based on first j service instances, where j≥1.

With reference to the first aspect, in some implementations of the first aspect, determining the first service instance from the plurality of service instances based on the priority information includes: the priority information is used to determine a plurality of second service instances from the plurality of service instances, where priorities of service types of the plurality of second service instances rank within first s' positions in descending order of the priorities of the service types of the plurality of service instances, and s'≥1; and the priority information is used to determine the first service instance from the plurality of second service instances, where a priority of a service layer to which the first service instance belongs ranks within first t' positions in descending order of the priorities of the service layers to which the plurality of second service instances belong, and t'≥1.

Based on the foregoing solution, when the resource needs to transmit and/or compute the plurality of services, it may be determined, based on a combination of priorities of layers to which the plurality of services belong and the priorities of the service types of the plurality of services, that the resource needs to transmit and/or compute the first service. The first service is a service whose service type has a priority within the first s' positions and whose service belonged layer has a priority within the first t' positions in the plurality of services, so that differentiated processing can be performed on the plurality of services, thereby improving resource utilization.

With reference to the first aspect, in some implementations of the first aspect, when the priority information indicates the priority of each of the plurality of service types and the priority information indicates the priority of each of the plurality of service modules, determining the first service instance from the plurality of service instances based on the priority information includes: the priority information is used to determine a plurality of second service instances from the plurality of service instances, where priorities of service types of the plurality of second service instances rank within first s' positions in descending order of the priorities of the service types of the plurality of service instances, and s'≥1; and the priority information is used to determine the first service instance from the plurality of second service instances, where a priority of a service module to which the first service instance belongs ranks within first p' positions in descending order of priorities of service modules to which the plurality of second service instances belong, and p'≥1.

With reference to the first aspect, in some implementations of the first aspect, when the priority information indicates the priority of each of the plurality of service types and the priority information indicates the priority of each of the plurality of service instances, determining the first service instance from the plurality of service instances based on the priority information includes: the priority information is used to determine a plurality of second service instances from the plurality of service instances, where priorities of service types of the plurality of second service instances rank within first s' positions in descending order of the priorities of the service types of the plurality of service instances, and s'≥1; and the priority information is used to determine the first service instance from the plurality of second service instances, where a priority of the first service instance ranks within first z' positions in descending order of the priorities of the plurality of second service instances, and z'≥1.

Based on the foregoing solution, when the resource needs to transmit and/or compute the plurality of service instances, it may be determined, based on a combination of priorities of the plurality of service instances and the priorities of the service types of the plurality of service instances, that the resource needs to transmit and/or compute the first service instance. The first service instance is a service whose service type has a priority within the first s' positions and whose service instance has a priority within the first z' positions in the plurality of service instances, so that differentiated processing can be performed on the plurality of service instances, thereby improving resource utilization.

With reference to the first aspect, in some implementations of the first aspect, when the priority information indicates the priority of each of the plurality of service layers and the priority information indicates the priority of each of the plurality of service modules, determining the first service instance from the plurality of service instances based on the priority information includes: the priority information is used to determine a plurality of second service instances from the plurality of service instances, where priorities of service layers to which the plurality of second service instances belong rank within first t' positions in descending order of the priorities of the service layers to which the plurality of service instances belong, and t'≥1; and the priority information is used to determine the first service instance from the plurality of second service instances, where a priority of a service module to which the first service instance belongs ranks within first p' positions in descending order of priorities of service modules to which the plurality of second service instances belong, and p'≥1.

With reference to the first aspect, in some implementations of the first aspect, when the priority information indicates the priority of each of the plurality of service layers and the priority information indicates the priority of each of the plurality of service modules, determining the first service instance from the plurality of service instances based on the priority information includes: the priority information is used to determine a plurality of second service instances from the plurality of service instances, where priorities of service layers to which the plurality of second service instances belong rank within first t' positions in descending order of the priorities of the service layers to which the plurality of service instances belong, and t'≥1; and the priority information is used to determine the first service instance from the plurality of second service instances, where a priority of a service module to which the first service instance belongs ranks within first z' positions in descending order of priorities of service modules to which the plurality of second service instances belong, and z'≥1.

Based on the foregoing solution, when the resource needs to transmit and/or compute the plurality of service instances, it may be determined, based on a combination of priorities of the plurality of service instances and the priorities of the service layers to which the plurality of service instances belong, that the resource needs to transmit and/or compute the first service instance. The first service instance is a service whose service layer has a priority within the first t' positions and whose service has a priority within the first z' positions in the plurality of service instances, so that differentiated processing can be performed on the plurality of service instances, thereby improving resource utilization.

With reference to the first aspect, in some implementations of the first aspect, when the priority information indicates the priority of each of the plurality of service modules and the priority information indicates the priority of each of the plurality of service instances, determining the first service instance from the plurality of service instances based on the priority information includes: the priority information is used to determine a plurality of second service instances from the plurality of service instances, where priorities of service modules to which the plurality of second service instances belong rank within first p' positions in descending order of the priorities of the service modules to which the plurality of service instances belong, and p'≥1; and the priority information is used to determine the first service instance from the plurality of second service instances, where a priority of the first service instance ranks within first z' positions in descending order of the priorities of the plurality of second service instances, and z'≥1.

With reference to the first aspect, in some implementations of the first aspect, when the priority information indicates the priority of each of the plurality of service types, the priority of each of the plurality of service layers, and the priority of each of the plurality of service modules, determining the first service instance from the plurality of service instances based on the priority information includes: the priority information is used to determine a plurality of third service instances from the plurality of service instances, where priorities of service types of the plurality of third service instances rank within first s' positions in descending order of the priorities of the service types of the plurality of service instances, and s'≥1; the priority information is used to determine a plurality of second service instances from the plurality of third service instances, where priorities of service layers to which the plurality of second service instances belong rank first t' positions in descending order of priorities of the service layers to which the plurality of third service instances belong, and t'≥1; and the priority information is used to determine the first service instance from the plurality of second service instances, where a priority of a service module to which the first service instance belongs ranks within first p' positions in descending order of priorities of the service modules to which the plurality of second service instances belong, and p'≥1.

With reference to the first aspect, in some implementations of the first aspect, when the priority information indicates the priority of each of the plurality of service types, the priority of each of the plurality of service layers, and the priority of each of the plurality of service instances, determining the first service instance from the plurality of service instances based on the priority information includes: the priority information is used to determine a plurality of third service instances from the plurality of service instances, where priorities of service types of the plurality of third service instances rank within first s' positions in descending order of the priorities of the service types of the plurality of service instances, and s'≥1; the priority information is used to determine a plurality of second service instances from the plurality of third service instances, where priorities of service layers to which the plurality of second service instances belong rank first t' positions in descending order of priorities of the service layers to which the plurality of third service instances belong, and t'≥1; and the priority information is used to determine the first service instance from the plurality of second service instances, where a priority of the first service instance ranks within first z' positions in descending order of priorities of the plurality of second service instances, and z'≥1.

Based on the foregoing solution, when the resource needs to transmit and/or compute the plurality of service instances, it may be determined, based on a combination of priorities of the plurality of service instances, priorities of service layers to which the plurality of service instances belong, and priorities of service types of the plurality of service instances, that the resource needs to transmit and/or compute the first service instance. The first service instance is a service instance whose service layer has a priority within the first t' positions, whose service type has a priority within first s' positions, and whose service instance has a priority within the first z' positions in the plurality of service instances, so that differentiated processing can be performed on the plurality of service instances, thereby improving resource utilization.

With reference to the first aspect, in some implementations of the first aspect, when the priority information indicates the priority of each of the plurality of service types, the priority of each of the plurality of service modules, and the priority of each of the plurality of service instances, determining the first service instance from the plurality of service instances based on the priority information includes: the priority information is used to determine a plurality of third service instances from the plurality of service instances, where priorities of service types of the plurality of third service instances rank within first s' positions in descending order of priorities of the service types of the plurality of service instances, and s'≥1; the priority information is used to determine a plurality of second service instances from the plurality of third service instances, where priorities of service modules to which the plurality of second service instances belong rank first p' positions in descending order of priorities of the service modules to which the plurality of third service instances belong, and p'≥1; and the priority information is used to determine the first service instance from the plurality of second service instances, where a priority of the first service instance ranks within first z' positions in descending order of priorities of the plurality of second service instances, and z'≥1.

With reference to the first aspect, in some implementations of the first aspect, when the priority information indicates the priority of each of the plurality of service layers, the priority of each of the plurality of service modules, and the priority of each of the plurality of service instances, determining the first service instance from the plurality of service instances based on the priority information includes: the priority information is used to determine a plurality of third service instances from the plurality of service instances, where priorities of service layers to which the plurality of third service instances belong rank within first t' positions in descending order of the priorities of the service layers to which the plurality of service instances belong, and t'≥1; the priority information is used to determine a plurality of second service instances from the plurality of third service instances, where priorities of service modules to which the plurality of second service instances belong rank first p' positions in descending order of priorities of the service modules to which the plurality of third service instances belong, and p'≥1; and the priority information is used to determine the first service instance from the plurality of second service instances, where a priority of the first service instance ranks within first z' positions in descending order of priorities of the plurality of second service instances, and z'≥1.

With reference to the first aspect, in some implementations of the first aspect, when the priority information indicates the priority of each of the plurality of service types, the priority of each of the plurality of service layers, the priority of each of the plurality of service modules, and the priority of each of the plurality of service instances, determining the first service instance from the plurality of service instances based on the priority information includes: the priority information is used to determine a plurality of fourth service instances from the plurality of service instances, where priorities of service types of the plurality of fourth service instances rank within first s' positions in descending order of the priorities of the service types of the plurality of service instances, and s'≥1; the priority information is used to determine a plurality of third service instances from the plurality of fourth service instances, where priorities of service layers to which the plurality of third service instances belong rank first t' positions in descending order of priorities of the service layers to which the plurality of fourth service instances belong, and t'≥1; the priority information is used to determine a plurality of second service instances from the plurality of third service instances, where priorities of service modules to which the plurality of second service instances belong rank within first p' positions in descending order of priorities of service modules to which the plurality of third service instances belong, and p'≥1; and the priority information is used to determine the first service instance from the plurality of second service instances, where a priority of the first service instance ranks within first z' positions in descending order of priorities of the plurality of second service instances, and z'≥1.

With reference to the first aspect, in some implementations of the first aspect, the service layer to which the plurality of service instances belong is predefined in the protocol, or the service layer to which the plurality of service instances belongs are indicated by the network device.

With reference to the first aspect, in some implementations of the first aspect, the service layer to which the plurality of service instances belong includes at least one of the following: a radio resource control RRC layer, a service data adaptation protocol SDAP layer, a physical PHY layer, a media access control MAC layer, a radio link control RLC layer, a packet data convergence protocol PDCP layer, an application APP layer, and a non-access stratum NAS.

With reference to the first aspect, in some implementations of the first aspect, the method is applied to the first communication apparatus, and the priority information is dedicated information of the first communication apparatus.

With reference to the first aspect, in some implementations of the first aspect, the method is applied to the first communication apparatus, and the mapping relationship information is dedicated information of the first communication apparatus.

The first communication apparatus is a terminal device and/or a network device.

Based on the foregoing solution, same or different priority information and same or different mapping relationship information can be configured for different communication apparatuses, so that the different communication apparatuses can determine, based on the different priority information and the different mapping relationship information, to allocate the at least one service instance to the first resource, and the resource allocation manner is more flexible.

With reference to the first aspect, in some implementations of the first aspect, the transmission resource includes at least one of the following: a time domain resource, a frequency domain resource, a space domain resource, and a code domain resource.

With reference to the first aspect, in some implementations of the first aspect, the computing resource includes at least one of the following: a time domain resource and a space domain resource.

According to a second aspect, a communication method is provided. The method includes: sending priority information, where the priority information indicates priorities of a service parameter of a plurality of service instances, and the service parameter includes at least one of the following: a service type, a service layer, a service module, a service instance identifier, and a resource scheduling grant; the priority information is used to determine at least one first service instance from the plurality of service instances, and a service type of the plurality of service instances includes a non-connection service type; and the at least one first service instance is processed by a first resource, the first resource is a resource allowed to be used to process the plurality of service instances, and the processing includes transmission and/or computing.

With reference to the second aspect, in some implementations of the second aspect, the method further includes: sending mapping relationship information, where the mapping relationship information and the first resource are used to determine the plurality of service instances from a plurality of service instances, the mapping relationship information indicates a mapping relationship between a plurality of service parameters and a plurality of resources, and the service parameter of the plurality of service instances is a service parameter indicated by the mapping relationship information and corresponding to the first resource.

With reference to the second aspect, in some implementations of the second aspect, the plurality of service instances are service instances in a first service instance set, and the first service instance set is predefined in a protocol, or the first service instance set is indicated by a network device.

With reference to the second aspect, in some implementations of the second aspect, the resource includes at least one of the following: a transmission resource, a radio frequency RF resource, and a computing resource.

With reference to the second aspect, in some implementations of the second aspect, the service type of the plurality of services includes the non-connection service type, and the non-connection service type includes at least one of the following: a network computing service type, a network data processing service type, a network AI service type, or a network sensing service type.

With reference to the second aspect, in some implementations of the second aspect, the service instance identifier includes an identifier of a data radio bearer DRB carrying a service instance.

With reference to the second aspect, in some implementations of the second aspect, that the priority information is used to determine the at least one first service instance from the plurality of service instances includes: the priority information is used to determine a first service instance set from the plurality of service instances in descending order of priorities of service types, where the first service instance set includes a plurality of service instances; the priority information is used to determine a second service instance set from the first service instance set in descending order of priorities of service layers, where the second service instance set includes a plurality of service instances; the priority information is used to determine a third service instance set from the second service instance set in descending order of priorities of service modules, where the third service instance set includes a plurality of service instances; and the priority information is used to determine the at least one first service instance from the third service instance set in descending order of priorities of service instance identifiers.

With reference to the second aspect, in some implementations of the second aspect, that the priority information is used to determine the at least one first service instance from the plurality of service instances includes: the priority information is used to determine the at least one first service instance from the plurality of service instances in descending order of priorities of service types to which the plurality of service instances belong.

With reference to the second aspect, in some implementations of the second aspect, that the priority information is used to determine the at least one first service instance from the plurality of service instances includes: the priority information is used to determine the at least one first service instance from the plurality of service instances in descending order of priorities of service layers to which the plurality of service instances belong.

With reference to the second aspect, in some implementations of the second aspect, that the priority information is used to determine the at least one first service instance from the plurality of service instances includes: the priority information is used to allocate the first resource in descending order of priorities of service modules to which the plurality of service instances belong, until the first resource is fully occupied or all the plurality of service instances are processed.

With reference to the second aspect, in some implementations of the second aspect, that the priority information is used to determine the at least one first service instance from the plurality of service instances includes: the priority information is used to determine the at least one first service instance from the plurality of service instances in descending order of priorities of service instance identifiers of the plurality of service instances.

With reference to the second aspect, in some implementations of the second aspect, that the priority information is used to determine the at least one first service instance from the plurality of service instances includes: the priority information is used to determine the at least one first service instance from the plurality of service instances in descending order of priorities of grants to which the plurality of service instances belong.

With reference to the second aspect, in some implementations of the second aspect, when the service parameter includes resource scheduling, a priority of each resource scheduling is determined based on a first priority corresponding to the resource scheduling, and the first priority of each resource scheduling is a highest priority in service instance priorities of at least one service instance corresponding to the resource scheduling.

With reference to the second aspect, in some implementations of the second aspect, that the priority information is used to determine the at least one first service instance from the plurality of service instances includes: when the plurality of service instances include a plurality of second service instances whose service parameter has same priorities, the priority information is used to randomly select at least one service instance from the plurality of second service instances as the first service instance.

With reference to the second aspect, in some implementations of the second aspect, the priority information is dedicated information of a first communication apparatus.

With reference to the second aspect, in some implementations of the second aspect, the mapping relationship information is dedicated information of the first communication apparatus.

With reference to the second aspect, in some implementations of the second aspect, when the priority information indicates the priority of each of the plurality of service types, that the priority information is used to determine the at least one first service instance from the plurality of service instances includes: the priority information is used to determine the priority of the service type of each of the plurality of service instances and determine the first service instance from the plurality of service instances, where a priority of a service type of the first service instance ranks within first s positions in descending order of the priorities of the service types of the plurality of service instances, and s≥1.

With reference to the second aspect, in some implementations of the second aspect, when the priority information indicates the priority of each of the plurality of service layers, that the priority information is used to determine the first service instance from the plurality of service instances includes: the priority information is used to determine the priority of the service layer of each of the plurality of service instances and determine the first service instance from the plurality of service instances, where a priority of a service layer to which the first service instance belongs ranks within first t positions in descending order of the priorities of the service layers to which the plurality of service instances belong, and t≥1.

With reference to the second aspect, in some implementations of the second aspect, when the priority information indicates the priority of each of the plurality of service modules, that the priority information is used to determine the first service instance from the plurality of service instances includes: the priority information is used to determine the priority of the service module of each of the plurality of service instances, and determine the first service instance from the plurality of service instances, where a priority of a service module of the first service instance ranks within first p positions in descending order of the priorities of the service modules of the plurality of service instances, and p≥1.

With reference to the second aspect, in some implementations of the second aspect, when the priority information indicates the priority of each of the plurality of service instances, that the priority information is used to determine the first service instance from the plurality of service instances includes: the priority information is used to determine the priority of each of the plurality of service instances, and determine the first service instance from the plurality of service instances, where a priority of the first service instance ranks within first z positions in descending order of the priorities of the plurality of service instances, and z≥1.

With reference to the second aspect, in some implementations of the second aspect, when the priority information indicates a priority of a grant (grant) and the resource is an RF resource, that the priority information is used to determine the first service instance from the plurality of service instances includes: the priority information is used to determine a priority of a grant corresponding to each of the plurality of service instances, and determine the first service instance from the plurality of service instances, where a priority of a grant corresponding to the first service instance ranks within first j positions in descending order of priorities of grants corresponding to the plurality of service instances, and j≥1.

With reference to the second aspect, in some implementations of the second aspect, when the priority information indicates the priority of each of the plurality of service types and the priority information indicates the priority of each of the plurality of service layers, that the priority information is used to determine the first service instance from the plurality of service instances includes: the priority information is used to determine a plurality of second service instances from the plurality of service instances, where priorities of service types of the plurality of second service instances rank within first s' positions in descending order of the priorities of the service types of the plurality of service instances, and s'≥1; and the priority information is used to determine the first service instance from the plurality of second service instances, where a priority of a service layer to which the first service instance belongs ranks within first t' positions in descending order of priorities of service layers to which the plurality of second service instances belong, and t'≥1.

With reference to the second aspect, in some implementations of the second aspect, when the priority information indicates the priority of each of the plurality of service types and the priority information indicates the priority of each of the plurality of service modules, that the priority information is used to determine the first service instance from the plurality of service instances includes: the priority information is used to determine a plurality of second service instances from the plurality of service instances, where priorities of service types of the plurality of second service instances rank within first s' positions in descending order of the priorities of the service types of the plurality of service instances, and s'≥1; and the priority information is used to determine the first service instance from the plurality of second service instances, where a priority of a service module to which the first service instance belongs ranks within first p' positions in descending order of priorities of service modules to which the plurality of second service instances belong, and p'≥1.

With reference to the second aspect, in some implementations of the second aspect, when the priority information indicates the priority of each of the plurality of service types and the priority information indicates the priority of each of the plurality of service instances, that the priority information is used to determine the first service instance from the plurality of service instances includes: the priority information is used to determine a plurality of second service instances from the plurality of service instances, where priorities of service types of the plurality of second service instances rank within first s' positions in descending order of the priorities of the service types of the plurality of service instances, and s'≥1; and the priority information is used to determine the first service instance from the plurality of second service instances, where a priority of the first service instance ranks within first z' positions in descending order of the priorities of the plurality of second service instances, and z'≥1.

With reference to the second aspect, in some implementations of the second aspect, when the priority information indicates the priority of each of the plurality of service layers and the priority information indicates the priority of each of the plurality of service modules, that the priority information is used to determine the first service instance from the plurality of service instances includes: the priority information is used to determine a plurality of second service instances from the plurality of service instances, where priorities of service layers to which the plurality of second service instances belong rank within first t' positions in descending order of the priorities of the service layers to which the plurality of service instances belong, and t'≥1; and the priority information is used to determine the first service instance from the plurality of second service instances, where a priority of a service module to which the first service instance belongs ranks within first p' positions in descending order of priorities of service modules to which the plurality of second service instances belong, and p'≥1.

With reference to the second aspect, in some implementations of the second aspect, when the priority information indicates the priority of each of the plurality of service layers and the priority information indicates the priority of each of the plurality of service modules, that the priority information is used to determine the first service instance from the plurality of service instances includes: the priority information is used to determine a plurality of second service instances from the plurality of service instances, where priorities of service layers to which the plurality of second service instances belong rank within first t' positions in descending order of the priorities of the service layers to which the plurality of service instances belong, and t'≥1; and the priority information is used to determine the first service instance from the plurality of second service instances, where a priority of a service module to which the first service instance belongs ranks within first z' positions in descending order of priorities of service modules to which the plurality of second service instances belong, and z'≥1.

With reference to the second aspect, in some implementations of the second aspect, when the priority information indicates the priority of each of the plurality of service modules and the priority information indicates the priority of each of the plurality of service instances, that the priority information is used to determine the first service instance from the plurality of service instances includes: the priority information is used to determine a plurality of second service instances from the plurality of service instances, where priorities of service modules to which the plurality of second service instances belong rank within first p' positions in descending order of the priorities of the service modules to which the plurality of service instances belong, and p'≥1; and the priority information is used to determine the first service instance from the plurality of second service instances, where a priority of the first service instance ranks within first z' positions in descending order of the priorities of the plurality of second service instances, and z'≥1.

With reference to the second aspect, in some implementations of the second aspect, when the priority information indicates the priority of each of the plurality of service types, the priority of each of the plurality of service layers, and the priority of each of the plurality of service modules, that the priority information is used to determine the first service instance from the plurality of service instances includes: the priority information is used to determine a plurality of third service instances from the plurality of service instances, where priorities of service types of the plurality of third service instances rank within first s' positions in descending order of the priorities of the service types of the plurality of service instances, and s'≥1; the priority information is used to determine a plurality of second service instances from the plurality of third service instances, where priorities of service layers to which the plurality of second service instances belong rank first t' positions in descending order of priorities of the service layers to which the plurality of third service instances belong, and t'≥1; and the priority information is used to determine the first service instance from the plurality of second service instances, where a priority of a service module to which the first service instance belongs ranks within first p' positions in descending order of priorities of the service modules to which the plurality of second service instances belong, and p'≥1.

With reference to the second aspect, in some implementations of the second aspect, when the priority information indicates the priority of each of the plurality of service types, the priority of each of the plurality of service layers, and the priority of each of the plurality of service instances, that the priority information is used to determine the first service instance from the plurality of service instances includes: the priority information is used to determine a plurality of third service instances from the plurality of service instances, where priorities of service types of the plurality of third service instances rank within first s' positions in descending order of the priorities of the service types of the plurality of service instances, and s'≥1; the priority information is used to determine a plurality of second service instances from the plurality of third service instances, where priorities of service layers to which the plurality of second service instances belong rank first t' positions in descending order of priorities of the service layers to which the plurality of third service instances belong, and t'≥1; and the priority information is used to determine the first service instance from the plurality of second service instances, where a priority of the first service instance ranks within first z' positions in descending order of priorities of the plurality of second service instances, and z'≥1.

With reference to the second aspect, in some implementations of the second aspect, when the priority information indicates the priority of each of the plurality of service types, the priority of each of the plurality of service modules, and the priority of each of the plurality of service instances, that the priority information is used to determine the first service instance from the plurality of service instances includes: the priority information is used to determine a plurality of third service instances from the plurality of service instances, where priorities of service types of the plurality of third service instances rank within first s' positions in descending order of priorities of the service types of the plurality of service instances, and s'≥1; the priority information is used to determine a plurality of second service instances from the plurality of third service instances, where priorities of service modules to which the plurality of second service instances belong rank first p' positions in descending order of priorities of the service modules to which the plurality of third service instances belong, and p'≥1; and the priority information is used to determine the first service instance from the plurality of second service instances, where a priority of the first service instance ranks within first z' positions in descending order of priorities of the plurality of second service instances, and z'≥1.

With reference to the second aspect, in some implementations of the second aspect, when the priority information indicates the priority of each of the plurality of service layers, the priority of each of the plurality of service modules, and the priority of each of the plurality of service instances, that the priority information is used to determine the first service instance from the plurality of service instances includes: the priority information is used to determine a plurality of third service instances from the plurality of service instances, where priorities of service layers to which the plurality of third service instances belong rank within first t' positions in descending order of the priorities of the service layers to which the plurality of service instances belong, and t'≥1; the priority information is used to determine a plurality of second service instances from the plurality of third service instances, where priorities of service modules to which the plurality of second service instances belong rank first p' positions in descending order of priorities of the service modules to which the plurality of third service instances belong, and p'≥1; and the priority information is used to determine the first service instance from the plurality of second service instances, where a priority of the first service instance ranks within first z' positions in descending order of priorities of the plurality of second service instances, and z'≥1.

With reference to the second aspect, in some implementations of the second aspect, when the priority information indicates the priority of each of the plurality of service types, the priority of each of the plurality of service layers, the priority of each of the plurality of service modules, and the priority of each of the plurality of service instances, that the priority information is used to determine the first service instance from the plurality of service instances includes: the priority information is used to determine a plurality of fourth service instances from the plurality of service instances, where priorities of service types of the plurality of fourth service instances rank within first s' positions in descending order of the priorities of the service types of the plurality of service instances, and s'≥1; the priority information is used to determine a plurality of third service instances from the plurality of fourth service instances, where priorities of service layers to which the plurality of third service instances belong rank first t' positions in descending order of priorities of the service layers to which the plurality of fourth service instances belong, and t'≥1; the priority information is used to determine a plurality of second service instances from the plurality of third service instances, where priorities of service modules to which the plurality of second service instances belong rank within first p' positions in descending order of priorities of service modules to which the plurality of third service instances belong, and p'≥1; and the priority information is used to determine the first service instance from the plurality of second service instances, where a priority of the first service instance ranks within first z' positions in descending order of priorities of the plurality of second service instances, and z'≥1.

With reference to the second aspect, in some implementations of the second aspect, the transmission resource includes at least one of the following: a time domain resource, a frequency domain resource, a space domain resource, and a code domain resource.

With reference to the second aspect, in some implementations of the second aspect, the computing resource includes at least one of the following: a time domain resource and a space domain resource.

With reference to the second aspect, in some implementations of the second aspect, the service layer to which the plurality of service instances belong is predefined in a protocol, or the service layer to which the plurality of service instances belong is indicated by the network device.

With reference to the second aspect, in some implementations of the second aspect, the service layer to which the plurality of service instances belong includes at least one of the following: a radio resource control RRC layer, a service data adaptation protocol SDAP layer, a physical PHY layer, a media access control MAC layer, a radio link control RLC layer, a packet data convergence protocol PDCP layer, an application APP layer, and a non-access stratum NAS.

According to a third aspect, a communication method is provided. The method includes: determining a first service instance from a plurality of service instances based on mapping relationship information and a first resource in at least one resource, where service types to which the plurality of service instances belong include a non-connection service type, and the mapping relationship information indicates at least one of the following: a correspondence between at least one resource and at least one service type, a correspondence between at least one resource and at least one service layer, a correspondence between at least one resource and at least one service module, and a correspondence between at least one resource and at least one service instance; and using the first resource to process the first service instance, where the first resource is a resource allocated to at least one first service instance, and the processing includes transmission and/or computing.

A non-connection service is a service other than a service that a network device provides a data transmission service for a first communication apparatus, for example, a computing service, a data processing service, an AI service, or a sensing service.

Based on the foregoing solution, one resource can be allocated, based on the correspondence indicated by the mapping relationship information, to the first service instance corresponding to the resource, where the first service instance is a service instance dedicated to the resource. In other words, the first resource is allocated to the first service instance of a corresponding service type and/or service layer and/or service module and/or service instance. This avoids preemption of the resource by other service instances and enables appropriate resource allocation, thereby improving resource utilization.

With reference to the third aspect, in some implementations of the third aspect, the resource includes at least one of a transmission resource or a computing resource.

Based on the foregoing solution, the resource may be the transmission resource, or the computing resource, so that resource allocation of any combination of the transmission resource and the computing resource can be subsequently performed, and a resource allocation manner is more flexible.

With reference to the third aspect, in some implementations of the third aspect, the transmission resource includes at least one of the following: a time domain resource, a frequency domain resource, a space domain resource, and a code domain resource.

With reference to the third aspect, in some implementations of the third aspect, the computing resource includes at least one of the following: a time domain resource and a space domain resource.

With reference to the third aspect, in some implementations of the third aspect, the method further includes: receiving the mapping relationship information.

With reference to the third aspect, in some implementations of the third aspect, the mapping relationship information is predefined in a protocol.

With reference to the third aspect, in some implementations of the third aspect, the method is applied to a first communication apparatus, and the correspondence between the at least one resource and the at least one service type, the correspondence between the at least one resource and the at least one service layer, the correspondence between the at least one resource and the at least one service module, and the correspondence between the at least one resource and the at least one service instance that are indicated by the mapping relationship information are dedicated to the first communication apparatus.

The first communication apparatus is a terminal device and/or a network device.

With reference to the third aspect, in some implementations of the third aspect, the non-connection service type includes at least one of the following: a network computing service type, a network data processing service type, a network AI service type, or a network sensing service type.

Based on the foregoing solution, the non-connection service type includes one or more of the network computing service type, the network data processing service type, the network AI service type, and the network sensing service type, so that resource allocation can be performed for service instances of a plurality of service types, and the resource allocation manner is more flexible.

With reference to the third aspect, in some implementations of the third aspect, the plurality of service instances are service instances in a first service instance set, and the first service instance set is predefined in a protocol, or the first service instance set is indicated by the network device.

With reference to the third aspect, in some implementations of the third aspect, the non-connection service type includes at least one of the following: a network computing service type, a network data processing service type, a network AI service type, or a network sensing service type.

With reference to the third aspect, in some implementations of the third aspect, when the mapping relationship information indicates the correspondence between the at least one resource and the at least one service type, determining the first service instance from the plurality of service instances based on the mapping relationship and the first resource in the at least one resource includes: determining, based on the mapping relationship information, a first service type corresponding to the first resource, and determining, from the plurality of service instances, the first service instance that belongs to the first service type, where the at least one service type includes the first service type.

With reference to the third aspect, in some implementations of the third aspect, when the mapping relationship information indicates the correspondence between the at least one resource and the at least one service layer, determining the first service instance from the plurality of service instances based on the mapping relationship and the first resource in the at least one resource includes: determining, based on the mapping relationship information, a first service layer corresponding to the first resource, and determining, from the plurality of service instances, the first service instance that belongs to the first service layer, where the at least one service layer includes the first service layer.

With reference to the third aspect, in some implementations of the third aspect, when the mapping relationship information indicates the correspondence between the at least one resource and the at least one service module, determining the first service instance from the plurality of service instances based on the mapping relationship and the first resource in the at least one resource includes: determining, based on the mapping relationship information, a first service module corresponding to the first resource, and determining, from the plurality of service instances, the first service instance that belongs to the first service module, where the at least one service module includes the first service module.

With reference to the third aspect, in some implementations of the third aspect, when the mapping relationship information indicates the correspondence between the at least one resource and the at least one service instance, determining the first service instance from the plurality of service instances based on the mapping relationship and the first resource in the at least one resource includes: determining, from the plurality of service instances based on the mapping relationship information, the first service instance corresponding to the first resource, where the at least one service instance includes the first service instance.

With reference to the third aspect, in some implementations of the third aspect, when the mapping relationship information indicates the correspondence between the at least one resource and the at least one service type, and the mapping relationship information indicates the correspondence between the at least one resource and the at least one service layer, determining the first service instance from the plurality of service instances based on the mapping relationship and the first resource in the at least one resource includes: determining, based on the mapping relationship information, a first service type and a first service layer that correspond to the first resource, and determining, from the plurality of service instances, the first service instance that belongs to the first service type and the first service layer, where the at least one service type includes the first service type, and the at least one service layer includes the first service layer.

With reference to the third aspect, in some implementations of the third aspect, when the mapping relationship information indicates the correspondence between the at least one resource and the at least one service type, and the mapping relationship information indicates the correspondence between the at least one resource and the at least one service instance, determining the first service instance from the plurality of service instances based on the mapping relationship information and the first resource in the at least one resource includes: determining, based on the mapping relationship information, a first service type corresponding to the first resource, and determining, from the plurality of service instances, a plurality of second service instances that belong to the first service type, where the at least one service type includes the first service type; and determining, from the plurality of second service instances based on the mapping relationship information, the first service instance corresponding to the first resource, where the at least one service instance includes the first service instance.

With reference to the third aspect, in some implementations of the third aspect, when the mapping relationship information indicates the correspondence between the at least one resource and the at least one service layer, and the mapping relationship information indicates the correspondence between the at least one resource and the at least one service instance, determining the first service instance from the plurality of service instances based on the mapping relationship information and the first resource in the at least one resource includes: determining, based on the mapping relationship information, a first service layer corresponding to the first resource, and determining, from the plurality of service instances, a plurality of second service instances that belong to the first service layer, where the at least one service layer includes the first service layer; and determining, from the plurality of second service instances based on the mapping relationship information, the first service instance corresponding to the first resource, where the at least one service instance includes the first service instance.

With reference to the third aspect, in some implementations of the third aspect, when the mapping relationship information indicates the correspondence between the at least one resource and the at least one service type, and the mapping relationship information indicates the correspondence between the at least one resource and the at least one service module, determining the first service instance from the plurality of service instances based on the mapping relationship information and the first resource in the at least one resource includes: determining, based on the mapping relationship information, a first service type corresponding to the first resource, and determining, from the plurality of service instances, a plurality of second service instances that belong to the first service type, where the at least one service type includes the first service type; and determining, based on the mapping relationship information, a first service module corresponding to the first resource, and determining, from the plurality of second service instances, the first service instance that belongs to the first service module, where the at least one service module includes the first service module.

With reference to the third aspect, in some implementations of the third aspect, when the mapping relationship information indicates the correspondence between the at least one resource and the at least one service layer, and the mapping relationship information indicates the correspondence between the at least one resource and the at least one service module, determining the first service instance from the plurality of service instances based on the mapping relationship information and the first resource in the at least one resource includes: determining, based on the mapping relationship information, a first service layer corresponding to the first resource, and determining, from the plurality of service instances, a plurality of second service instances that belong to the first service layer, where the at least one service layer includes the first service layer; and determining, based on the mapping relationship information, a first service module corresponding to the first resource, and determining, from the plurality of second service instances, the first service instance that belongs to the first service module, where the at least one service module includes the first service module.

With reference to the third aspect, in some implementations of the third aspect, when the mapping relationship information indicates the correspondence between the at least one resource and the at least one service instance, and the mapping relationship information indicates the correspondence between the at least one resource and the at least one service module, determining the first service instance from the plurality of service instances based on the mapping relationship information and the first resource in the at least one resource includes: determining, based on the mapping relationship information, a first service module corresponding to the first resource, and determining, from the plurality of service instances, a plurality of second service instances that belong to the first service module, where the at least one service module includes the first service layer; and determining, from the plurality of second service instances based on the mapping relationship information, the first service instance corresponding to the first resource, where the at least one service instance includes the first service instance.

With reference to the third aspect, in some implementations of the third aspect, when the mapping relationship information indicates the correspondence between the at least one resource and the at least one service type, the correspondence between the at least one resource and the at least one service layer, and the correspondence between the at least one resource and the at least one service instance, determining the first service instance from the plurality of service instances based on the mapping relationship information and the first resource in the at least one resource includes: determining, based on the mapping relationship, a first service type corresponding to the first resource, and determining, from the plurality of service instances, a plurality of third service instances that belong to the first service type, where the at least one service type includes the first service type; determining, based on the mapping relationship, a first service layer corresponding to the first resource, and determining, from the plurality of third service instances, a plurality of second service instances that belong to the first service layer, where the at least one service layer includes the first service layer; and determining, from the plurality of second service instances based on the mapping relationship, the first service instance corresponding to the first resource, where the at least one service instance includes the first service instance.

With reference to the third aspect, in some implementations of the third aspect, when the mapping relationship information indicates the correspondence between the at least one resource and the at least one service type, the correspondence between the at least one resource and the at least one service layer, and the correspondence between the at least one resource and the at least one service module, determining the first service instance from the plurality of service instances based on the mapping relationship information and the first resource in the at least one resource includes: determining, based on the mapping relationship, a first service type corresponding to the first resource, and determining, from the plurality of service instances, a plurality of third service instances that belong to the first service type, where the at least one service type includes the first service type; determining, based on the mapping relationship, a first service layer corresponding to the first resource, and determining, from the plurality of third service instances, a plurality of second service instances that belong to the first service layer, where the at least one service layer includes the first service layer; and determining, based on the mapping relationship, a first service module corresponding to the first resource, and determining, from the plurality of second service instances, the first service instance that belongs to the first service module, where the at least one service module includes the first service module.

With reference to the third aspect, in some implementations of the third aspect, when the mapping relationship information indicates the correspondence between the at least one resource and the at least one service type, the correspondence between the at least one resource and the at least one service instance, and the correspondence between the at least one resource and the at least one service module, determining the first service instance from the plurality of service instances based on the mapping relationship information and the first resource in the at least one resource includes: determining, based on the mapping relationship, a first service type corresponding to the first resource, and determining, from the plurality of service instances, a plurality of third service instances that belong to the first service type, where the at least one service type includes the first service type; determining, based on the mapping relationship, a first service module corresponding to the first resource, and determining, from the plurality of third service instances, a plurality of second service instances that belong to the first service module, where the at least one service module includes the first service module; and determining, from the plurality of second service instances based on the mapping relationship, the first service instance corresponding to the first resource, where the at least one service instance includes the first service instance.

With reference to the third aspect, in some implementations of the third aspect, when the mapping relationship information indicates the correspondence between the at least one resource and the at least one service layer, the correspondence between the at least one resource and the at least one service instance, and the correspondence between the at least one resource and the at least one service module, determining the first service instance from the plurality of service instances based on the mapping relationship information and the first resource in the at least one resource includes: determining, based on the mapping relationship, a first service layer corresponding to the first resource, and determining, from the plurality of service instances, a plurality of third service instances that belong to the first service layer, where the at least one service layer includes the first service layer; determining, based on the mapping relationship, a first service module corresponding to the first resource, and determining, from the plurality of third service instances, a plurality of second service instances that belong to the first service module, where the at least one service module includes the first service module; and determining, from the plurality of second service instances based on the mapping relationship, the first service instance corresponding to the first resource, where the at least one service instance includes the first service instance.

With reference to the third aspect, in some implementations of the third aspect, when the mapping relationship information indicates the correspondence between the at least one resource and the at least one service type, the correspondence between the at least one resource and the at least one service layer, the correspondence between the at least one resource and the at least one service module, and the correspondence between the at least one resource and the at least one service instance, determining the first service instance from the plurality of service instances based on the mapping relationship information and the first resource in the at least one resource includes: determining, based on the mapping relationship, a first service type corresponding to the first resource, and determining, from the plurality of service instances, a plurality of fourth service instances that belong to the first service type, where the at least one service type includes the first service type; determining, based on the mapping relationship, a first service layer corresponding to the first resource, and determining, from the plurality of service instances, a plurality of third service instances that belong to the first service layer, where the at least one service layer includes the first service layer; determining, based on the mapping relationship, a first service module corresponding to the first resource, and determining, from the plurality of third service instances, a plurality of second service instances that belong to the first service module, where the at least one service module includes the first service module; and determining, from the plurality of second service instances based on the mapping relationship, the first service instance corresponding to the first resource, where the at least one service instance includes the first service instance.

Based on the foregoing solution, it can be determined, based on any combination of correspondences indicated by the mapping relationship information, to allocate the first resource to the first service instance of a corresponding service type and/or service layer and/or service module and/or service instance. This avoids preemption of the resource by other service instances and enables appropriate resource allocation, thereby improving resource utilization.

With reference to the third aspect, in some implementations of the third aspect, the service layer to which the plurality of service instances belong is predefined in a protocol, or the service layer to which the plurality of service instances belongs are indicated by the network device.

With reference to the third aspect, in some implementations of the third aspect, the service layer to which the plurality of service instances belong includes at least one of the following: a radio resource control RRC layer, a service data adaptation protocol SDAP layer, a physical PHY layer, a media access control MAC layer, a radio link control RLC layer, a packet data convergence protocol PDCP layer, an application APP layer, and a non-access stratum NAS.

Based on the foregoing solution, the plurality of service instances may belong to any one of the RRC layer, the SDAP layer, the PHY layer, the MAC layer, the RLC layer, the PDCP layer, the APP layer, and the NAS layer, so that resource allocation can be performed for service instances at a plurality of service layers, and a resource allocation manner is more flexible.

According to a fourth aspect, a communication method is provided. The method includes: sending mapping relationship information, where the mapping relationship information indicates at least one of the following: a correspondence between at least one resource and at least one service type, a correspondence between at least one resource and at least one service layer, a correspondence between at least one resource and at least one service module, and a correspondence between at least one resource and at least one service instance; and the mapping relationship information and a first resource in the at least one resource are used to determine a first service instance, the first resource is used to process the first service instance, the first resource is a resource allocated to at least one first service instance, and the processing includes transmission and/or computing.

With reference to the fourth aspect, in some implementations of the fourth aspect, the resource includes at least one of a transmission resource or a computing resource.

The transmission resource includes at least one of the following: a time domain resource, a frequency domain resource, a space domain resource, and a code domain resource. The computing resource includes at least one of the following: a time domain resource and a space domain resource.

With reference to the fourth aspect, in some implementations of the fourth aspect, a non-connection service type includes at least one of the following: a network computing service type, a network data processing service type, a network AI service type, or a network sensing service type.

With reference to the fourth aspect, in some implementations of the fourth aspect, the plurality of service instances are service instances in a first service instance set, the first service instance set includes service instances that need to be processed, and the first service instance set is predefined in a protocol, or the first service instance set is indicated by a network device.

With reference to the fourth aspect, in some implementations of the fourth aspect, the non-connection service type includes at least one of the following: the network computing service type, the network data processing service type, the network AI service type, or the network sensing service type.

With reference to the fourth aspect, in some implementations of the fourth aspect, when the mapping relationship information indicates the correspondence between the at least one resource and the at least one service type, that the mapping relationship information and the first resource in the at least one resource are used to determine the first service instance includes: the mapping relationship information is used to determine a first service type corresponding to the first resource, and determine, from the plurality of service instances, the first service instance that belongs to the first service type, where the at least one service type includes the first service type.

With reference to the fourth aspect, in some implementations of the fourth aspect, when the mapping relationship information indicates the correspondence between the at least one resource and the at least one service layer, that the mapping relationship information and the first resource in the at least one resource are used to determine the first service instance includes: determining, based on the mapping relationship information, a first service layer corresponding to the first resource, and determining, from the plurality of service instances, the first service instance that belongs to the first service layer, where the at least one service layer includes the first service layer.

With reference to the fourth aspect, in some implementations of the fourth aspect, when the mapping relationship information indicates the correspondence between the at least one resource and the at least one service module, that the mapping relationship information and the first resource in the at least one resource are used to determine the first service instance includes: the mapping relationship information is used to determine a first service module corresponding to the first resource, and determine, from the plurality of service instances, the first service instance that belongs to the first service module, where the at least one service module includes the first service module.

With reference to the fourth aspect, in some implementations of the fourth aspect, when the mapping relationship information indicates the correspondence between the at least one resource and the at least one service instance, that the tong mapping relationship information and the first resource in the at least one resource are used to determine the first service instance includes: the mapping relationship information is used to determine, from the plurality of service instances, the first service instance corresponding to the first resource, where the at least one service instance includes the first service instance.

With reference to the fourth aspect, in some implementations of the fourth aspect, when the mapping relationship information indicates the correspondence between the at least one resource and the at least one service type, and the mapping relationship information indicates the correspondence between the at least one resource and the at least one service layer, that the mapping relationship information and the first resource in the at least one resource are used to determine the first service instance includes: the mapping relationship information is used to determine a first service type and a first service layer that correspond to the first resource, and determine, from the plurality of service instances, the first service instance that belongs to the first service type and the first service layer, where the at least one service type includes the first service type, and the at least one service layer includes the first service layer.

With reference to the fourth aspect, in some implementations of the fourth aspect, when the mapping relationship information indicates the correspondence between the at least one resource and the at least one service type, and the mapping relationship information indicates the correspondence between the at least one resource and the at least one service instance, that the mapping relationship information and the first resource in the at least one resource are used to determine the first service instance from the plurality of service instances includes: the mapping relationship information is used to: determine a first service type corresponding to the first resource and determine, from the plurality of service instances, a plurality of second service instances that belong to the first service type, where the at least one service type includes the first service type; and determine, from the plurality of second service instances based on the mapping relationship information, the first service instance corresponding to the first resource, where the at least one service instance includes the first service instance.

With reference to the fourth aspect, in some implementations of the fourth aspect, when the mapping relationship information indicates the correspondence between the at least one resource and the at least one service layer, and the mapping relationship information indicates the correspondence between the at least one resource and the at least one service instance, that the mapping relationship information and the first resource in the at least one resource are used to determine the first service instance from the plurality of service instances includes: the mapping relationship information is used to: determine a first service layer corresponding to the first resource, and determine, from the plurality of service instances, a plurality of second service instances that belong to the first service layer, where the at least one service layer includes the first service layer; and determine, from the plurality of second service instances based on the mapping relationship information, the first service instance corresponding to the first resource, where the at least one service instance includes the first service instance.

With reference to the fourth aspect, in some implementations of the fourth aspect, when the mapping relationship information indicates the correspondence between the at least one resource and the at least one service type, and the mapping relationship information indicates the correspondence between the at least one resource and the at least one service module, that the mapping relationship information and the first resource in the at least one resource are used to determine the first service instance from the plurality of service instances includes: the mapping relationship information is used to: determine a first service type corresponding to the first resource and determine, from the plurality of service instances, a plurality of second service instances that belong to the first service type, where the at least one service type includes the first service type; and determine, based on the mapping relationship information, a first service module corresponding to the first resource, and determine, from the plurality of second service instances, the first service instance that belongs to the first service module, where the at least one service module includes the first service module.

With reference to the fourth aspect, in some implementations of the fourth aspect, when the mapping relationship information indicates the correspondence between the at least one resource and the at least one service layer, and the mapping relationship information indicates the correspondence between the at least one resource and the at least one service module, that the mapping relationship information and the first resource in the at least one resource are used to determine the first service instance from the plurality of service instances includes: the mapping relationship information is used to: determine a first service layer corresponding to the first resource, and determine, from the plurality of service instances, a plurality of second service instances that belong to the first service layer, where the at least one service layer includes the first service layer; and determine, based on the mapping relationship information, a first service module corresponding to the first resource, and determine, from the plurality of second service instances, the first service instance that belongs to the first service module, where the at least one service module includes the first service module.

With reference to the fourth aspect, in some implementations of the fourth aspect, when the mapping relationship information indicates the correspondence between the at least one resource and the at least one service instance, and the mapping relationship information indicates the correspondence between the at least one resource and the at least one service module, that the mapping relationship information and the first resource in the at least one resource are used to determine the first service instance from the plurality of service instances includes: the mapping relationship information is used to: determine a first service module corresponding to the first resource, and determine, from the plurality of service instances, a plurality of second service instances that belong to the first service module, where the at least one service module includes the first service layer; and determine, from the plurality of second service instances based on the mapping relationship information, the first service instance corresponding to the first resource, where the at least one service instance includes the first service instance.

With reference to the fourth aspect, in some implementations of the fourth aspect, when the mapping relationship information indicates the correspondence between the at least one resource and the at least one service type, the correspondence between the at least one resource and the at least one service layer, and the correspondence between the at least one resource and the at least one service instance, that the mapping relationship information and the first resource in the at least one resource are used to determine the first service instance from the plurality of service instances includes: the mapping relationship is used to: determine a first service type corresponding to the first resource, and determine, from the plurality of service instances, a plurality of third service instances that belong to the first service type, where the at least one service type includes the first service type; determine, based on the mapping relationship, a first service layer corresponding to the first resource, and determine, from the plurality of third service instances, a plurality of second service instances that belong to the first service layer, where the at least one service layer includes the first service layer; and determine, from the plurality of second service instances based on the mapping relationship, the first service instance corresponding to the first resource, where the at least one service instance includes the first service instance.

With reference to the fourth aspect, in some implementations of the fourth aspect, when the mapping relationship information indicates the correspondence between the at least one resource and the at least one service type, the correspondence between the at least one resource and the at least one service layer, and the correspondence between the at least one resource and the at least one service module, that the mapping relationship information and the first resource in the at least one resource are used to determine the first service instance from the plurality of service instances includes: the mapping relationship is used to: determine a first service type corresponding to the first resource, and determine, from the plurality of service instances, a plurality of third service instances that belong to the first service type, where the at least one service type includes the first service type; determine, based on the mapping relationship, a first service layer corresponding to the first resource, and determine, from the plurality of third service instances, a plurality of second service instances that belong to the first service layer, where the at least one service layer includes the first service layer; and determine, based on the mapping relationship, a first service module corresponding to the first resource, and determine, from the plurality of second service instances, the first service instance that belongs to the first service module, where the at least one service module includes the first service module.

With reference to the fourth aspect, in some implementations of the fourth aspect, when the mapping relationship information indicates the correspondence between the at least one resource and the at least one service type, the correspondence between the at least one resource and the at least one service instance, and the correspondence between the at least one resource and the at least one service module, that the mapping relationship information and the first resource in the at least one resource are used to determine the first service instance from the plurality of service instances includes: the mapping relationship is used to: determine a first service type corresponding to the first resource, and determine, from the plurality of service instances, a plurality of third service instances that belong to the first service type, where the at least one service type includes the first service type; determine, based on the mapping relationship, a first service module corresponding to the first resource, and determine, from the plurality of third service instances, a plurality of second service instances that belong to the first service module, where the at least one service module includes the first service module; and determine, from the plurality of second service instances based on the mapping relationship, the first service instance corresponding to the first resource, where the at least one service instance includes the first service instance.

With reference to the fourth aspect, in some implementations of the fourth aspect, when the mapping relationship information indicates the correspondence between the at least one resource and the at least one service layer, the correspondence between the at least one resource and the at least one service instance, and the correspondence between the at least one resource and the at least one service module, that the mapping relationship information and the first resource in the at least one resource are used to determine the first service instance from the plurality of service instances includes: the mapping relationship is used to: determine a first service layer corresponding to the first resource, and determine, from the plurality of service instances, a plurality of third service instances that belong to the first service layer, where the at least one service layer includes the first service layer; determine, based on the mapping relationship, a first service module corresponding to the first resource, and determine, from the plurality of third service instances, a plurality of second service instances that belong to the first service module, where the at least one service module includes the first service module; and determine, from the plurality of second service instances based on the mapping relationship, the first service instance corresponding to the first resource, where the at least one service instance includes the first service instance.

With reference to the fourth aspect, in some implementations of the fourth aspect, when the mapping relationship information indicates the correspondence between the at least one resource and the at least one service type, the correspondence between the at least one resource and the at least one service layer, the correspondence between the at least one resource and the at least one service module, and the correspondence between the at least one resource and the at least one service instance, that the mapping relationship information and the first resource in the at least one resource are used to determine the first service instance from the plurality of service instances includes: the mapping relationship is used to: determine a first service type corresponding to the first resource, and determine, from the plurality of service instances, a plurality of fourth service instances that belong to the first service type, where the at least one service type includes the first service type; determine, based on the mapping relationship, a first service layer corresponding to the first resource, and determine, from the plurality of service instances, a plurality of third service instances that belong to the first service layer, where the at least one service layer includes the first service layer; determine, based on the mapping relationship, a first service module corresponding to the first resource, and determine, from the plurality of third service instances, a plurality of second service instances that belong to the first service module, where the at least one service module includes the first service module; and determine, from the plurality of second service instances based on the mapping relationship, the first service instance corresponding to the first resource, where the at least one service instance includes the first service instance.

With reference to the fourth aspect, in some implementations of the fourth aspect, the service layer to which the plurality of service instances belong is predefined in a protocol, or the service layer to which the plurality of service instances belongs are indicated by the network device.

With reference to the fourth aspect, in some implementations of the fourth aspect, the service layer to which the plurality of service instances belong includes at least one of the following: a radio resource control RRC layer, a service data adaptation protocol SDAP layer, a physical PHY layer, a media access control MAC layer, a radio link control RLC layer, a packet data convergence protocol PDCP layer, an application APP layer, and a non-access stratum NAS.

According to a fifth aspect, a communication apparatus is provided. The apparatus includes: a transceiver unit, where the transceiver unit may perform receiving and sending processing according to the first aspect to the fourth aspect; and a processing unit, where the processing unit may perform processing other than receiving and sending according to the first aspect to the fourth aspect.

According to a sixth aspect, a communication apparatus is provided, and includes a processor. The processor is configured to execute a computer program, to enable the communication apparatus to perform the method according to any one of the first aspect to the fourth aspect and the possible implementations of the first aspect to the fourth aspect.

Optionally, there are one or more processors.

Optionally, the communication apparatus further includes a memory, the memory is configured to store the computer program, and there are one or more memories.

Optionally, the memory may be integrated with the processor, or the memory and the processor are separately disposed, or the memory is located in the processor.

Optionally, the communication apparatus further includes a transceiver circuit, for example, a transceiver or an input/output circuit.

According to a seventh aspect, a communication system is provided, and includes a terminal device and a network device. The terminal device is configured to perform the method according to the possible implementations of the first aspect and the third aspect, and the network device is configured to perform the method according to the possible implementations of the first aspect to the fourth aspect.

According to an eighth aspect, a computer-readable storage medium is provided. The computer-readable storage medium stores a computer program or code. When the computer program or code is run on a computer, the computer is enabled to perform the method according to any one of the possible implementations of the first aspect to the fourth aspect.

According to a ninth aspect, a chip is provided, and includes at least one processor. A processor is configured to run a computer program, to enable an apparatus in which the chip is installed to perform the method according to any one of the first aspect to the fourth aspect and the possible implementations of the first aspect to the fourth aspect.

The chip may include an output circuit or interface configured to send information or data and an input circuit or interface configured to receive information or data.

According to a tenth aspect, a computer program product is provided. The computer program product includes computer program code, and when the computer program code is run on a communication apparatus, the apparatus is enabled to perform the method according to any one of the first aspect to the fourth aspect and the possible implementations of the first aspect to the fourth aspect.

### BRIEF DESCRIPTION OF DRAWINGS

FIG. 1A to FIG. 1D are diagrams of scenarios to which an embodiment of this application is applicable;
FIG. 2 is a diagram of a federated learning process;
FIG. 3 shows three manners in which a transmission resource exists;
FIG. 4 shows three manners in which an RF resource exists;
FIG. 5 shows three manners in which a computing resource exists;
FIG. 6 is a diagram of a communication system 100 to which an embodiment of this application is applicable;
FIG. 7 is a diagram of a communication system 200 to which an embodiment of this application is applicable;
FIG. 8 is a diagram of information transfer between layers of a UE and layers of a base station;
FIG. 9 is a schematic flowchart of a communication method 400 according to an embodiment of this application;
FIG. 10 is a diagram of configured inter-layer priorities;
FIG. 11 is a diagram of absolute priorities configured for service instances;
FIG. 12 is a diagram of priorities configured for intra-layer service instances;
FIG. 13 is a schematic flowchart of a communication method 500 according to an embodiment of this application;
FIG. 14 is a block diagram of a communication apparatus 1000 according to an embodiment of this application;
FIG. 15 is a block diagram of a communication apparatus 2000 according to an embodiment of this application; and
FIG. 16 is a block diagram of a chip system 3000 according to an embodiment of this application.

### DESCRIPTION OF EMBODIMENTS

The following describes technical solutions of this application with reference to accompanying drawings.

Numbers such as first and second are merely used for differentiation for ease of description, and are not used to limit the scope of embodiments of this application, or indicate an order or importance. For example, different messages or different information is distinguished. "Predefinition" may be implemented by pre-storing corresponding code or a corresponding table in a device, or may be implemented in another manner that may be used for indicating related information. A specific implementation thereof is not limited in this application. The related "protocol" may be a standard protocol in the communication field, for example, may include a long term evolution (long term evolution, LTE) protocol, a new radio (new radio, NR) protocol, and a related protocol used in a future communication system. This is not limited in this application. Words such as "for example", "example", and "in an (another) example" represent giving an example, an illustration, or a description. Any embodiment or design scheme described as an "example" in this application should not be explained as being more preferred or having more advantages than another embodiment or design scheme. The terms "include", "have", and their variants all mean "include but are not limited to", unless otherwise specifically emphasized in another manner. "At least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. Related descriptions about sending a message, information, or data by a network element A to a network element B, and receiving the message, information, or data by the network element B from the network element A are intended to describe a network element to which the message, information, or data is to be sent. Whether the message, information, or data is directly sent or indirectly sent via another network element is not limited. "Indicating" may include "directly indicating" and "indirectly indicating". When a piece of indication information indicates A, the indication information may directly indicate A or indirectly indicate A, but it does not indicate that the indication information definitely carries A. Descriptions such as "when...", "in a case of...", and "if" all mean that a device performs corresponding processing in a specific objective situation, where time is not limited, the device is not necessarily required to perform a determining action during implementation, and there are no other limitations.

The technical solutions in embodiments of this application may be applied to various communication systems, including but not limited to: a global system for mobile communications (global system of mobile communications, GSM) system, an enhanced data rate for GSM evolution (enhanced data rate for GSM evolution, EDGE) system, a 5th generation (5th generation, 5G) system or a new radio (new radio, NR) system, a long term evolution (long term evolution, LTE) system, a long term evolution-advanced (long term evolution-advanced, LTE-A) system, an LTE frequency division duplex (frequency division duplex, FDD) system, an LTE time division duplex (time division duplex, TDD) system, a wideband code division multiple access (wideband code division multiple access, WCDMA) system, a code division multiple access (code division multiple access, CDMA) system, a time division-synchronous code division multiple access (time division-synchronization code division multiple access, TD-SCDMA) system, a wireless local area network (wireless local area network, WLAN) system, a satellite communication system, an optical communication system, and a microwave communication system. The technical solutions may be further applied to a future communication system, for example, a sixth-generation mobile communication system or a convergence system of a plurality of systems. In addition, the technical solutions may be further applied to device to device (device to device, D2D) communication, vehicle-to-everything (vehicle-to-everything, V2X) communication, machine to machine (machine to machine, M2M) communication, machine type communication (machine type communication, MTC), an internet of things (internet of things, IoT) communication system, or another communication system. In addition, the technical solutions may be further extended to similar wireless communication systems, for example, a wireless fidelity (wireless-fidelity, Wi-Fi)-related communication system, a worldwide interoperability for microwave access (worldwide interoperability for microwave access, WIMAX)-related communication system, and a 3rd generation partnership project (3rd generation partnership project, 3GPP)-related communication system. This is not limited.

A device in a communication system may send a signal to another device or receive a signal from another device. The signal may include information, signaling, data, or the like. The device may alternatively be replaced with an entity, a network entity, a communication device, a communication module, a node, a communication node, or the like. In this application, the device is used as an example for description. For example, the communication system may include at least one terminal device and at least one network device. The network device may send a downlink signal to the terminal device, and/or the terminal device may send an uplink signal to the network device.

The terminal device in embodiments of this application includes various devices having a wireless communication function, and the terminal device may be configured to be connected to a person, an object, a machine, and the like. The terminal device may be widely used in various scenarios, such as cellular communication, D2D, V2X, peer-to-peer (peer-to-peer, P2P), M2M, MTC, IoT, virtual reality (virtual reality, VR), augmented reality (augmented reality, AR), industrial control, automated driving, telemedicine, a smart grid, smart furniture, a smart office, smart wearable, smart transportation, a smart city drone, a robot, remote sensing, passive sensing, positioning, navigation and tracking, and autonomous delivery. The terminal device may be a terminal in any one of the foregoing scenarios, such as an MTC terminal or an IoT terminal. The terminal device may be a user equipment (user equipment, UE) in a 3rd generation partnership project (3rd generation partnership project, 3GPP) standard, a terminal (terminal), a fixed device, a mobile station (mobile station) device or a mobile device, a subscriber unit (subscriber unit), a handheld device, an in-vehicle device, a wearable device, a cellular phone (cellular phone), a smartphone (smartphone), a session initiation protocol (session initiation protocol, SIP) phone, a wireless data card, a personal digital assistant (personal digital assistant, PDA), a computer, a tablet computer, a notebook computer, a wireless modem, a handset (handset) device, a laptop computer (laptop computer), a computer having a wireless transceiver function, a smart book, a vehicle, a satellite, a global positioning system (global positioning system, GPS) device, a target tracking device, a flight vehicle (for example, an uncrewed aerial vehicle, a helicopter, a multi-helicopter, a four-helicopter, or an airplane), a ship, a remote control device, a smart home device, an industrial device, an apparatus disposed in the foregoing device (for example, a communication module, a modem, or a chip in the foregoing device), or another processing device connected to a wireless modem. For ease of description, an example in which the terminal device is a terminal or a UE is used below for description.

It should be understood that, in some scenarios, the UE may be further configured to act as a base station. For example, the UE may act as a scheduling entity that provides a sidelink signal between UEs in a scenario like V2X, D2D, or P2P.

In embodiments of this application, an apparatus configured to implement a function of the terminal device may be a terminal device, or may be an apparatus that can support the terminal device in implementing the function, for example, a chip system or a chip. The apparatus may be mounted in the terminal device. In embodiments of this application, the chip system may include a chip, or may include a chip and another discrete component.

A network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may be generally referred to as any of the following names, or may be replaced with any of the following names: a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master station, a secondary station, a multiple radio access technologies (multiple radio access technologies, multi-RAT) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), a positioning node, a RAN intelligent controller (RAN intelligent controller, RIC), and the like. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. Neither of a specific technology and a specific device form used by the network device is limited in embodiments of this application.

The base station may be fixed or mobile. For example, a helicopter or an uncrewed aerial vehicle may be configured as a mobile base station, and one or more cells may move based on a position of the mobile base station. In another example, a helicopter or an uncrewed aerial vehicle may be configured as a device for communicating with another base station.

In some deployments, the network device mentioned in embodiments of this application may be a device including a CU or a DU, or a device including a CU and a DU, or a device including a CU control plane (central unit-control plane, CU-CP) and a CU user plane (central unit-user plane, CU-UP) and a DU node. For example, the network device may include a gNB-CU-CP, a gNB-CU-UP, and a gNB-DU.

In some deployments, a plurality of RAN nodes coordinate to assist the terminal in implementing radio access, and different RAN nodes respectively implement some functions of a base station. For example, the RAN node may be a CU, a DU, a CU-CP, a CU-UP, or an RU. The CU and the DU may be separately arranged, or may be included in a same network element, for example, a BBU. The RU may be included in a radio frequency device or a radio frequency unit, for example, included in an RRU, an AAU, or an RRH. In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit. In different systems, the CU (or the CU-CP and the CU-UP), the DU, or the RU may also have different names, but a person skilled in the art may understand meanings thereof. For example, the radio access network may alternatively be an open radio access network (open radio access network, ORAN) architecture. In an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented via a software module, a hardware module, or a combination of a software module and a hardware module.

In embodiments of this application, an apparatus configured to implement a function of the network device may be a network device, or may be an apparatus that can support the network device in implementing the function, for example, a chip system or a chip. The apparatus may be mounted in the network device. In embodiments of this application, the chip system may include a chip, or may include a chip and another discrete component.

The network device and the terminal device may be deployed on land, including an indoor or outdoor device, a handheld device, or a vehicle-mounted device; may be deployed on a water surface; or may be deployed on an airplane, a balloon, and a satellite in air. A scenario in which the network device and the terminal device are located is not limited in embodiments of this application. In addition, the terminal device and the network device may be hardware devices; or may be software functions running on dedicated hardware or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

Scenarios to which this application may be applied include but are not limited to an enhanced mobile broadband (enhanced mobile broadband, eMBB) scenario, an ultra-reliable low latency communication (ultra-reliable low latency communication, URLLC) scenario, an M2M scenario, a massive machine-type communications (massive machine-type communications, mMTC) scenario, an uplink ultra-broadband (uplink centric broadband communication, UCBC) scenario, and a real-time broadband communication (real-time broadband communication, RTBC) scenario. This is not limited.

For ease of understanding, the following briefly describes scenarios to which embodiments of this application are applicable. It should be understood that the following scenarios are merely examples, and scenarios to which this application is applicable are not limited thereto.

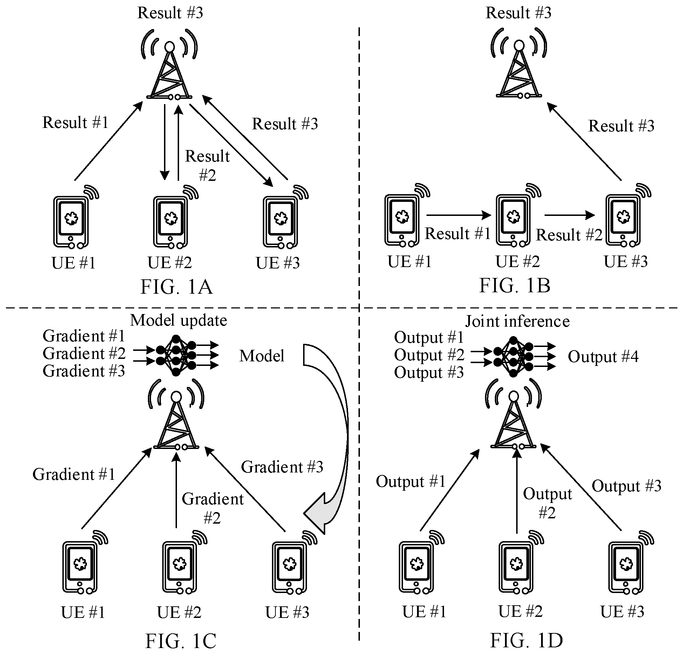

FIG. 1A to FIG. 1D are diagrams of scenarios to which an embodiment of this application is applicable. As shown in FIG. 1A to FIG. 1D, the scenarios to which embodiments of this application are applicable include a scenario (a), a scenario (b), a scenario (c), and a scenario (d). When services such as computing, artificial intelligence (artificial intelligence, AI) inference, AI training, and data processing are performed in a 6G network, service information needs to be exchanged between a network device and a terminal device. For example, the scenario (a) is a scenario in which centralized processing is performed on a computing/data processing service. The scenario (b) is a scenario in which distributed processing is performed on a computing/data processing service. The data processing service is, for example, serial data processing. The scenario (c) is a scenario in which gradient reporting and model update delivery are performed on an AI training service. The AI training service in the scenario (c) may also be implemented in a federated learning (federated learning, FL) manner. The scenario (d) is a scenario in which intermediate output interaction is performed on an AI inference service. The AI inference service may also be referred to as a joint inference service.

It should be understood that the service in this application may also be referred to as another name. This is not limited in this application.

In the scenario (a), after completing data computing, a UE #1 reports a result #1 obtained through computing to a base station. The base station then sends the result #1 to a UE #2 as an input of the UE #2, and the UE #2 continues to perform computing to obtain a result #2, and reports the result #2 to the base station. The base station then sends the result #2 to a UE #3 as an input of the UE #3, and the UE #3 continues to perform computing to obtain a result #3, and reports the result #3 to the base station. The base station uses the result #3.

Different from the scenario (a), in the scenario (b), a result #1 and a result #2 are no longer forwarded by a base station, but are transferred between UEs. As shown in FIG. 1B, after completing data computing, a UE #1 obtains the result #1 through computing and transfers the result #1 to a UE #2; then, the UE #2 obtains the result #2 through computing and transfers the result #2 to a UE #3; and finally, the UE #3 obtains a result #3 through computing and reports the result #3 to the base station.

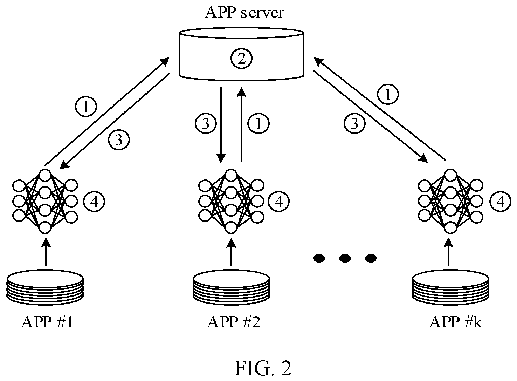

In the scenario (c), a base station performs federated learning with a plurality of UEs to perform joint training and finally obtain an AI model. Because UE-side data cannot be directly uploaded to a base station side due to privacy reasons, a UE side first performs gradient computation. For example, a UE #1, a UE #2, and a UE #3 separately perform gradient computation to obtain gradient values, which are respectively a gradient #1, a gradient #2, and a gradient #3. The UE #1, UE #2, and UE #3 separately report the gradient #1, gradient #2, and gradient #3 to the base station. The base station then updates a global model based on the reported gradient values, and delivers an updated global model to each UE. Each UE then performs gradient computation and reporting based on the updated global model, so as to perform a next round of model optimization. FIG. 2 is a diagram of a federated learning process. The following specifically describes the federated learning process by using applications (applications, APPs) and an APP server. As shown in FIG. 2, the federated learning process is as follows.
① Send encrypted gradients. A plurality of APPs report own gradients to the APP server.
② Perform security aggregation. The APP server performs gradient aggregation on the collected gradients reported by one or more APPs, and updates an AI model to obtain a new AI model through learning.
③ Send back the updated model. Deliver the new AI model to each APP.
④ Update models. The APPs replace the AI models used by the APPs with the new AI model received in step ③, for subsequent training and gradient solving. For example, the APPs perform a next round of training on the new AI model, and report obtained gradient values to the APP server. Steps ① to ④ are repeated to complete the next round of model optimization.

In the scenario (d), a plurality of UEs first perform model inference and then report respective inference results to a base station. The base station performs joint inference based on the reported inference results of the plurality of UEs, and applies the inference results. As shown in FIG. 1D, a UE #1, a UE #2, and a UE #3 separately perform data inference by using own AI models, to obtain the inference results, which are respectively an output #1, an output #2, and an output #3. The UE #1, UE #2, and UE #3 separately report the output #1, output #2, and output #3 to the base station. The base station then performs joint inference on the reported output #1, output #2, and output #3 based on own AI model to obtain the final inference result, for example, an output #4. The base station finally applies the output #4.

All the foregoing four scenarios are related to service information transmission between the UEs and the base station through an air interface, for example, information transfer in the scenario (a) in which the UEs obtain inputs from the base station and report the computing results to the base station, for another example, information transfer in the scenario (b) in which the UEs transfer the computing results with each other and the UE #3 report the final computing result to the base station, for another example, information transfer in the scenario (c) in which the UEs report the gradient values to the base station and the base station delivers the updated global model to the UEs, and for another example, information transfer in the scenario (d) in which the UEs report the inference results to the base station.

However, when service information transmission is performed between the UEs and the base station through the air interface, a communication resource needs to be allocated to the service information. The communication resource includes a transmission resource and an RF resource. The communication resource includes the transmission resource. Allocating the communication resource to the service information may include, for example, allocating the transmission resource to data of a connection service, or allocating the transmission resource to data of a non-connection service. The data of the connection service is content transmitted in conventional wireless communication, such as content of a user call or content of Internet access. The data of the non-connection service is service data in a network, including a network computing service, a network data processing service, a network AI service, a network sensing service, and the like. The transmission resource includes one or more of a time domain resource, a frequency domain resource, a space domain resource, a code domain resource, and the like. The transmission resource includes the time domain resource like an orthogonal frequency division multiplexing (orthogonal frequency division multiplexing, OFDM) symbol or a subframe. The transmission resource includes the frequency domain resource like a subcarrier. The transmission resource includes the space domain resource like a physical resource block (physical resource block, PRB) or an antenna. The transmission resource includes the code domain resource like a spreading code. In some embodiments, the communication resource may further include the radio frequency (radio frequency, RF) resource. Allocating the communication resource to the service information further includes allocating the RF resource to the service information, for example, allocating the RF resource to data of a connection service; or allocating the RF resource to data of a non-connection service.

In addition, the foregoing four scenarios are further related to service data processing by the UEs and the base station, for example, data processing in the scenario (a) and the scenario (b) in which the UEs obtain the results through computing, for another example, data processing in the scenario (c) in which the UEs perform gradient computation and the base station performs model update, and for another example, data processing in the scenario (d) in which the UEs and the base station perform data inference.

In some embodiments, when the UEs and the base station perform computing on the service data, a computing resource needs to be allocated to the service data, for example, the computing resource is allocated to the data of the connection service; or for another example, the computing resource is allocated to the data of the non-connection service. The computing resource includes a time domain resource and/or a space domain resource. The time domain resource is a plurality of resources distinguished from a computing resource in time domain, for example, time slices. It may be understood that a same computing resource may be allocated to different services or processes in a time slice rotation manner. The space domain resource is a computing resource formed by a plurality of computing entities, for example, a plurality of central processing units (central processing units, CPUs)/graphics processing units (graphics processing units, GPUs)/neural network processing units (neural network processing units, NPUs)/tensor processing units (tensor processing units, TPUs).

It should be noted that the foregoing four scenarios are merely examples, and scenarios to which embodiments of this application are applicable are not limited thereto. Embodiments of this application may be further applicable to a homogeneous network scenario or a heterogeneous network scenario, or may be further applicable to a low-frequency scenario, for example, a sub-6G scenario, or may be further applicable to a high-frequency scenario, for example, a scenario above 6G, or may be further applicable to a terahertz communication scenario, or the like. This is not limited in this application.

There are three manners in which the transmission resource exists: completely not shared, partially shared, or completely shared, and there are three manners in which the computing resource exists: completely not shared, partially shared, or completely shared. The details are described as follows.

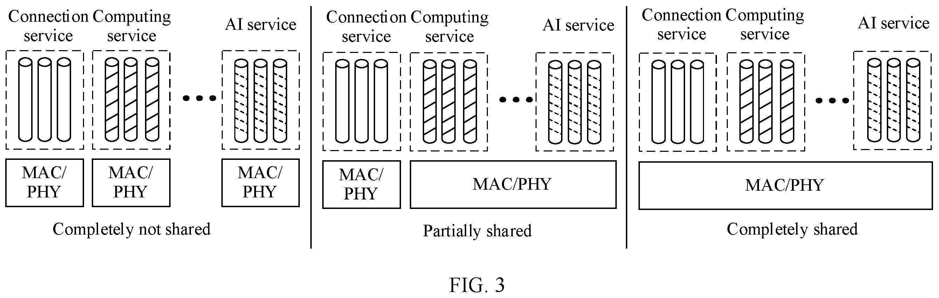

For example, FIG. 3 shows three manners in which a transmission resource exists. The transmission resource may be one or more resources of any combination of a time domain resource, a frequency domain resource, a space domain resource, a code domain resource, and the like. As shown in FIG. 3, there are the three manners in which the transmission resource exists: completely not shared, partially shared, or completely shared. The following describes examples of a dedicated transmission resource and a shared transmission resource at a service type level.

Manner 1: When the transmission resource is completely not shared, a connection service, a computing service, an AI service, and the like each have own dedicated transmission resource.

Manner 2: When the transmission resource is partially shared, data of a part of services shares the transmission resource, and data of a part of services has a dedicated transmission resource. For example, in FIG. 3, data of a connection service has a dedicated transmission resource, and data of non-connection services has the same transmission resource.

Manner 3: When the transmission resource is completely shared, a connection service, a computing service, an AI service, and the like all have the same transmission resource.

It should be noted that different services may have one or more service instances. For example, the AI service has a service instance related to channel state information (channel state information, CSI) measurement, a service instance related to scheduler (scheduler) scheduling, a service instance related to handover (handover, HO), and the like. Therefore, when the transmission resource is dedicated, the transmission resource may also be dedicated to some service instances, for example, the transmission resource is dedicated to the service instance related to CSI measurement. When the transmission resource is shared, some service instances may also share one transmission resource. In addition, when service instances are started, the service instances may belong to different service layers. For example, the service instance related to CSI measurement belongs to a physical layer (physical layer, PHY), the service instance related to scheduler scheduling belongs to a media access control (medium access control, MAC) layer, and the service instance related to handover belongs to a radio resource control (radio resource control, RRC) layer. Therefore, in Manner 1, when the transmission resource is completely not shared (or the transmission resource is dedicated), one transmission resource may be dedicated to service instances at some service layers, for example, the transmission resource is dedicated to a service instance at a MAC layer. In Manner 3, when the transmission resource is shared, service instances at some service layers share one transmission resource, for example, a plurality of service instances at a MAC layer share one transmission resource. In addition, the service instances may also belong to different service modules. For example, the service instance related to the scheduler may belong to a scheduler module, and the service instance related to CSI measurement belongs to a channel estimation and feedback module. Therefore, in Manner 1, when the transmission resource is completely not shared (or the transmission resource is dedicated), one transmission resource may be dedicated to some service modules, for example, the transmission resource is dedicated to a service instance in the channel estimation and feedback module. In Manner 3, when the transmission resource is shared, service instances in some service modules share one transmission resource, for example, a plurality of service instances in the channel estimation and feedback module share one transmission resource.

Therefore, the transmission resource may be classified into a case in which the transmission resource is dedicated and a case in which the transmission resource is shared. It may be understood that, that the transmission resource is dedicated may be understood as that some service instances, service layers to which some service instances belong, service types to which some service instances belong, and service modules to which some service instances belong have respective dedicated transmission resources. That the transmission resource is shared may be understood as that some service instances, service layers to which some service instances belong, service types to which some service instances belong, and service modules to which some service instances belong use one transmission resource.

The following describes the three manners in which the RF resource exists. A service instance carried on the transmission resource is finally sent by using the RF resource.

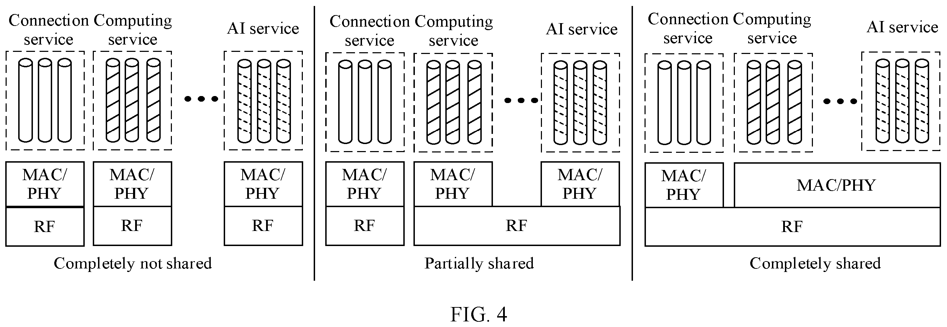

For example, FIG. 4 shows three manners in which an RF resource exists. The transmission resource may be sent through an RF antenna included in the RF resource, or the like. As shown in FIG. 4, there are the three manners in which the RF resource exists: completely not shared, partially shared, or completely shared. When the transmission resource is shared, the RF resource also needs to be shared. When the transmission resource is not shared, the RF resource may be dedicated or shared. The three manners are specifically described as follows.

Manner 1: When the RF resource is completely not shared, or in other words, when each transmission resource has a dedicated RF resource, or in other words, each transmission resource has an independent RF resource.

Manner 2: When the RF resource is partially shared, some transmission resources share the RF resource, and some transmission resources have dedicated RF resources. For example, in FIG. 4, a transmission resource corresponding to data of a connection service has a dedicated RF resource, and transmission resources corresponding to data of non-connection services have a same RF resource.

Manner 3: When the RF resource is completely shared, transmission resources corresponding to a connection service, a computing service, an AI service, and the like all have the same RF resource.

It should be noted that when the RF resource is dedicated, in other words, when one transmission resource is dedicated to one RF resource, because the RF resource exists independently, a plurality of transmission resources may be sent by using a plurality of independent RF resources. Because each independent RF resource can be used to independently send a transmission resource, no RF resource contention exists for transmission resources sent by using the independent RF resources. For both Manner 2 and Manner 3, there is a case in which the RF resource is shared by the transmission resources. When the transmission resource is shared, the RF resource needs to be shared. For example, when the RF resource is completely shared in FIG. 4, when the computing service and the AI service share one transmission resource, the computing service and the AI service also need to share the RF resource. When the transmission resource is dedicated, the RF resource may be shared or independent. For example, when the RF resource is partially shared in FIG. 4, transmission resources of the computing service and the AI service are independent of each other, but the RF resource is shared.

That the RF resource is shared may be understood as that a plurality of transmission resources use one RF resource. However, when the RF resource is shared, even if a plurality of transmission resources need to be sent at a same moment, only one of the transmission resources can be transmitted through the RF antenna by using the shared RF. Each transmission resource carries a service instance after scheduling (grant).

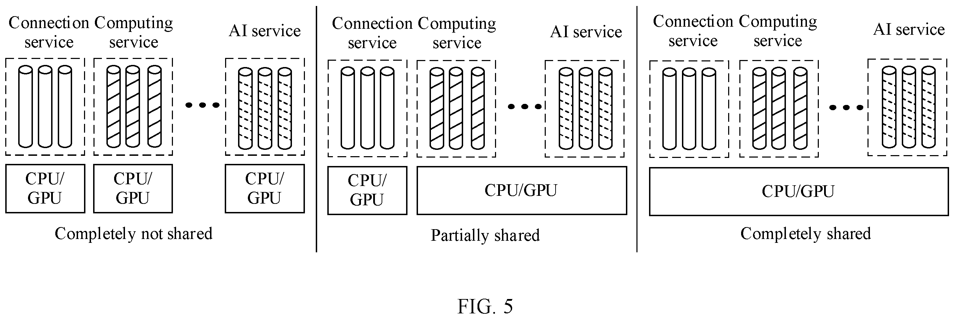

For example, FIG. 5 shows three manners in which a computing resource exists. The computing resource may be any one or two of a time domain resource and a space domain resource. The time domain resource and the space domain resource have been described above, and details are not described herein again. As shown in FIG. 5, there are the three manners in which the computing resource exists: completely not shared, partially shared, or completely shared. The following describes examples of a dedicated computing resource and a shared computing resource at a service type level.

Manner a: When the computing resource is completely not shared, a connection service, a computing service, an AI service, and the like each have own dedicated computing resource.

Manner b: When the computing resource is partially shared, data of a part of services shares the computing resource, and data of a part of services has a dedicated computing resource. For example, in FIG. 5, data of a connection service has a dedicated computing resource, and data of non-connection services has the same computing resource.

Manner c: When the computing resource is completely shared, a connection service, a computing service, an AI service, and the like all have the same computing resource.

It should be noted that similar to the transmission resource, when the computing resource is dedicated, the computing resource may be dedicated to service instances of some service types, or may be dedicated to service instances at some service layers, or may be dedicated to service instances in some service modules, or may be dedicated to some service instances, or may be dedicated to a service instance that belongs to a service type and a service layer, or may be dedicated to a service instance that belongs to a service type and a service module. For brevity, details are not listed one by one herein again. It should be understood that the computing resource and the transmission resource are similar, and both may be dedicated to some service types, some service layers, some service modules, or some service instances, or may be dedicated to at least one service instance of any combination of a service type, a service layer, a service module, and a service instance. Similarly, when the computing resource is shared, service instances that belong to some service types may share one computing resource, service instances that belong to some layers may share one transmission resource, or service instances that belong to some service types and some service layers may share one computing resource. For brevity, details are not listed one by one.

Therefore, the computing resource may be classified into a case in which the computing resource is dedicated and a case in which the computing resource is shared. It may be understood that, that the computing resource is dedicated may be understood as that some service instances, service layers to which some service instances belong, service types to which some service instances belong, and service modules to which some service instances belong have respective dedicated computing resources. That the computing resource is shared may be understood as that some service instances, service layers to which some service instances belong, service types to which some service instances belong, and service modules to which some service instances belong use one computing resource. In other words, a plurality of services correspond to one computing resource.

However, in the case in which the transmission resource or the computing resource is dedicated mentioned above, a service instance has a dedicated transmission resource or computing resource. As a result, when the transmission resource or computing resource is used, preemption of a resource by the plurality of service instances may exist. In addition, in the case in which the transmission resource, the RF resource, and the computing resource are shared, there are the plurality of service instances at a same moment, and allocating the shared resources to which service instances in the plurality of service instances needs to be considered.

Therefore, when the foregoing mentioned resources are dedicated and shared, different resources need to be allocated to different service instances. For example, when a resource is dedicated, it needs to be ensured that the resource is dedicated to some service instances, to prevent the resource from being preempted by a service instance other than the dedicated service instance. For another example, when the resource is shared, the shared resource needs to be appropriately allocated to a plurality of service instances. How to appropriately allocate a resource to the foregoing mentioned data of the connection data and non-connection service to improve resource utilization is critical.

Based on the foregoing problem, this application provides a communication method. When the first resource needs to transmit and/or compute a plurality of service instances, a service instance that needs to be preferentially transmitted and/or computed by using the first resource can be determined from the plurality of service instances based on priorities of service types to which the plurality of service instances belong and/or priorities of service layers to which the plurality of service instances belong and/or priorities of service modules to which the plurality of service instances belong and/or priorities of the plurality of service instances and/or priorities of grants to which the plurality of service instances belong, so that differentiated processing can be performed on the plurality of service instances, thereby improving resource utilization. In addition, in the method, the first resource can be further allocated, based on a correspondence indicated by mapping relationship information, to the service instance of a corresponding service type and/or service layer and/or service module and/or service instance. This avoids preemption of a resource by the plurality of service instances and enables appropriate resource allocation, thereby improving resource utilization.

First, a communication system to which embodiments of this application are applicable is briefly described below.

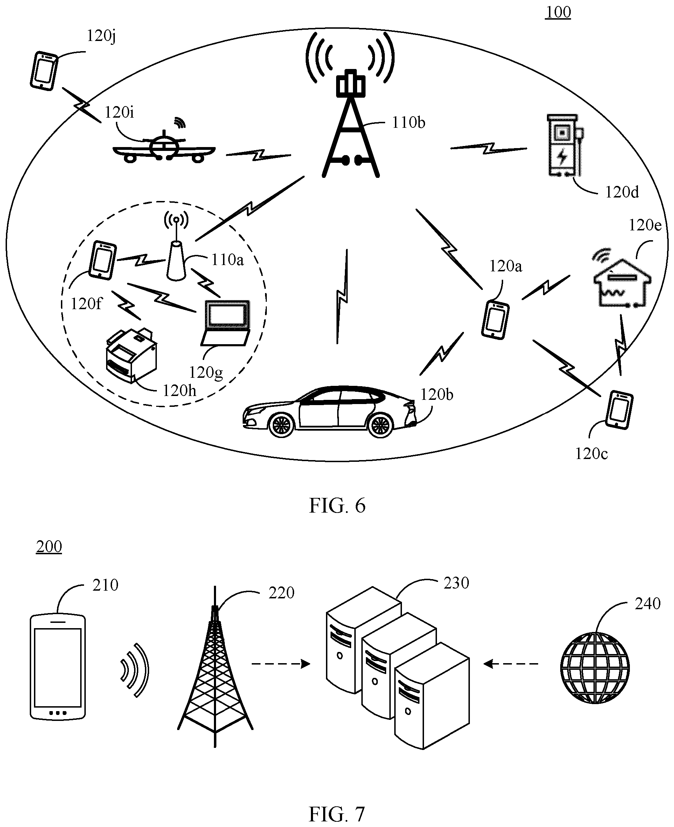

FIG. 6 is a diagram of a communication system 100 to which an embodiment of this application is applicable. As shown in FIG. 3, the communication system 100 includes a radio access network 100. The radio access network 100 may be a next generation (for example, 6G or a higher version) radio access network, or a conventional (for example, 5G, 4G, 3G, or 2G) radio access network. One or more terminal devices (120a to 120j, collectively referred to as 120) may be connected to each other or connected to one or more network devices (110a and 110b, collectively referred to as 110) in the radio access network 100. FIG. 3 is merely a diagram. The communication system 100 may further include another device, for example, may further include a core network device, a wireless relay device, and/or a wireless backhaul device, as shown in FIG. 7.

In actual application, the wireless communication system may include a plurality of network devices, and may also include a plurality of terminal devices. This is not limited. One network device may serve one or more terminal devices. One terminal device may also access one or more network devices. Quantities of terminal devices and network devices included in the wireless communication system are not limited in embodiments of this application.

FIG. 7 is a diagram of a communication system 200 to which an embodiment of this application is applicable. As shown in FIG. 7, the communication system 200 includes at least one base station, for example, a base station 220 shown in FIG. 7. The communication system 200 further includes at least one terminal device, for example, a terminal device 210 shown in FIG. 7. The communication system 200 further includes a core network, for example, a core network 230 shown in FIG. 7. The communication system 200 further includes an external network, for example, an external network 240 shown in FIG. 7.

The external network is a network outside a specific organization, system, or network architecture, for example, an external public switched telephone network and an external circuit data network.

The core network is a core part of a mobile communication network, and has functions such as providing a user connection, managing a user, and carrying a service. Establishment of the user connection includes functions such as mobility management (mobility management, MM), calling management (calling management, CM), switching/routing, and recording notification. The recording notification function can be used together with an intelligent network service to establish connections to peripheral devices of the intelligent network. User management includes quality of service (quality of service, QoS) of the user, a user communication record (accounting), a virtual home environment (virtual home environment, VHE), and security. The VHE can provide a virtual home environment through a dialog with an intelligent network platform. Security is ensured by corresponding security measures provided by an authentication center. Security includes security management on a mobile service and security processing on external network access. A bearer connection (access to) includes an external public switched telephone network (public switched telephone network, PSTN), an external circuit data network and a packet data network, an internet (internet) and an enterprise intranet (intranet), and a mobile short message service (short message service, SMS) server, and the like. Basic services that the core network can provide include a mobile office, e-commerce, communication, entertainment services, travel and location-based services, remote sensing (telemetry) services, simple messaging services, such as monitoring and control, and the like.

The core network may further be responsible for functions such as mobility management, session management, and data transmission of a terminal user. Data transmission is a core function of the core network. A 5G core network enhances a service-based architecture based on an evolved packet core (evolved packet core, EPC), and supports network slicing and a function of separation of a control plane and a user plane. Compared with a 4G core network, the 5G core network evolves to a split architecture. Separation includes separation of network functions and separation of the control plane and the user plane. The separation of the network functions absorbs a cloud-native design idea of network functions virtualization (network functions virtualization, NFV), and builds a network in a software-based, modular, and service-oriented manner. The separation of the control plane and the user plane frees the user plane function from a "centralized" constraint, allowing it to be flexibly deployed on the core network or the access network.

The base station may send, to the core network for further processing, received information sent by the terminal device. Therefore, the terminal device may perform information transfer with the core network via the base station.

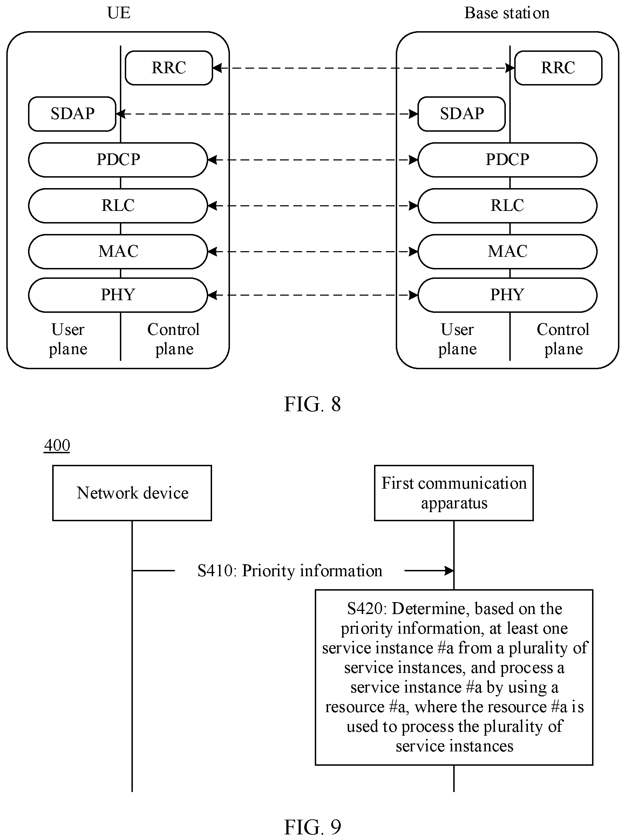

The terminal device and the base station both may include a user plane (user plane) protocol and a control plane (control plane) protocol. As shown in FIG. 8, the terminal device and the base station both may include a physical layer (physical layer, PHY), a media access control (medium access control, MAC) layer, a radio link control (radio link control, RLC) layer, a packet data convergence protocol (packet data convergence protocol, PDCP) layer, a radio resource control (radio resource control, RRC) layer, and a service data adaptation protocol (service data adaptation protocol, SDAP) layer. Layers of the terminal device and layers of the base station may be connected to each other to perform information transfer.

FIG. 9 is a schematic flowchart of a communication method 400 according to an embodiment of this application.

The following provides, with reference to FIG. 9, a method procedure of resource allocation and use in a case in which a resource is shared. As shown in FIG. 9, the method 400 may include the following plurality of steps.

S410: A network device sends priority information to a first communication apparatus, where the priority information indicates at least one of the following: a priority of each of a plurality of service types, a priority of each of a plurality of service layers, a priority of each of a plurality of service modules, a priority of each of a plurality of service instances, and a priority of each of a plurality of resource scheduling grants. Correspondingly, the first communication apparatus receives the priority information from the network device.

The first communication apparatus may be a terminal device, or may be a network device.

In a possible implementation, the priority of each of the plurality of service types, the priority of each of the plurality of service layers, the priority of each of the plurality of service modules, the priority of each of the plurality of service instances, and the priority, of each of the plurality of resource scheduling grants, that are indicated by the priority information may alternatively be predefined in a protocol.

The plurality of service types are represented by S service types, the plurality of service layers are represented by T service layers, the plurality of service modules are represented by P service modules, the plurality of service instances are represented by N service instances, and the plurality of grants are represented by M grants below. S≥2, T≥2, P≥2, N≥2, and M≥2, and setting of each priority is described by using an example.

It should be noted that when there is only one service type and/or service layer and/or service module and/or service instance, that is, S=1 or T=1 or P=1 or N=1 or M=1, the network device also needs to configure the priority information for the first communication apparatus. This is not limited in this application.

If the priority information indicates the priority of each of the S service types, the priority of each of the S service types may be referred to as a service type priority. Priorities of the S service types may be the same or may be different. This is not limited.

For example, the S service types are {a service type #1, a service type #2, a service type #3, ..., a service type #S}, and the priorities of the S service types are the service type #1>the service type #2>the service type #3>...>the service type #N.

The service type priority is a QoS priority configured based on a service type to which a service instance belongs. In other words, the service type priority may be a QoS priority configuration performed based on a type to which a service instance belongs. Details are as follows.

For example, predefined service instance type priorities may be "a connection type>an AI type (AI4NET)>a computing type>a data processing type>a sensing type>an AI type (NET4AI)", where ">"indicates QoS priority levels of corresponding services. For example, "A>B" indicates that a QoS priority of a type-A service instance is higher than a QoS priority of a type-B service instance. To be specific, a QoS priority of the connection type is higher than a QoS priority of the AI type AI4NET, the QoS priority of the AI type AI4NET is higher than a QoS priority of the computing type, the QoS priority of the computing type is higher than a QoS priority of the data processing type, the QoS priority of the data processing type is higher than a QoS priority of the sensing type, and the QoS priority of the sensing type is higher than a QoS priority of the AI type NET4AI. AI4NET (AI for network) is a service instance that uses AI to improve network performance, efficiency, and user service experience. NET4AI (network for AI) is a service instance that provides a plurality of support capabilities for AI through a network, so that AI training/inference can be implemented more efficiently and in real time, or data security and privacy protection can be improved.

In addition, the priorities may alternatively be represented by "<" to indicate priority levels. For example, "A<B" indicates that a QoS priority of a type-A service instance is lower than a QoS priority of a type-B service instance. Alternatively, "=" may indicate priority levels. For example, "A=B" indicates that a QoS priority of a type-A service instance is the same as a QoS priority of a type-B service instance, or a QoS priority of a type-A service instance is equal to a QoS priority of a type-B service instance.

It should be noted that the priorities may be configured in a form of "A>B", or "A<B", or "A=B", to indicate levels of the QoS priority of the type-A service instance and the QoS priority of the type-B service instance. The priority may alternatively be configured in a form of a rule, or may be configured in another form. This is not limited in this application.

In a possible implementation, the network device may specify different service instance type priorities for different first communication apparatuses. For example, the network device may configure different service type priority orders for a first terminal device and a second terminal device. Alternatively, the network device may configure different service type priority orders for a first network device and a second network device.

For example, service instance type priorities configured by the network device for the first terminal device or the first network device is "a connection type>a computing type>a sensing type", and service instance type priorities configured by the network device for the second terminal device or the second network device is "a computing type>a sensing type>a connection type".

In a possible implementation, the network device may alternatively configure same service instance type priorities for different first communication apparatuses. For example, the network device configures service type priorities of "a connection type>a computing type>a sensing type" for both a first terminal device and a second terminal device, or the network device configures service type priorities of "a connection type>a computing type>a sensing type" for both a first network device and a second network device.

In a possible implementation, the network device configures same service type priorities for the terminal device and the network device. For example, the network device may configure service type priorities of "a connection type>a computing type>a sensing type" for both the terminal device and the network device.

In a possible implementation, the network device configures different service type priorities for the terminal device and the network device. For example, service type priorities configured by the network device for the terminal devices may be "a connection type>a computing type>a sensing type", and service type priorities configured for the network device may be "a connection type>a sensing type>a computing type".

In conclusion, the network device may configure same priorities for different first communication apparatuses, or may configure different priorities.

The service instance type priorities are configured, to enable the first communication apparatus to perform differentiated processing on service instances of different service types, thereby improving communication effectiveness and reliability.

If the priority information indicates the priority of each of the T service layers, the priority of each of the T service layers may be referred to as an inter-layer priority. Priorities of the T service layers may be the same or may be different. This is not limited.

For example, the T service layers are {a service layer #1, a service layer #2, a service layer #3, ..., a service layer #T}, and the priorities of the T service layers are the service layer #1>the service layer #2>the service layer #3>...>the service layer #N. A service layer is a layer at which a trigger source of each service instance is located. The trigger source may be understood as a place at which the service instance is started, and the layer at which the service trigger source is located is a layer to which the service instance belongs when the service instance is started.

The inter-layer priority is a QoS priority configured based on a service layer to which a service instance belongs. In other words, the inter-layer priority may be a QoS priority configuration performed based on a layer at which a trigger source of a service instance is located. Details are as follows.

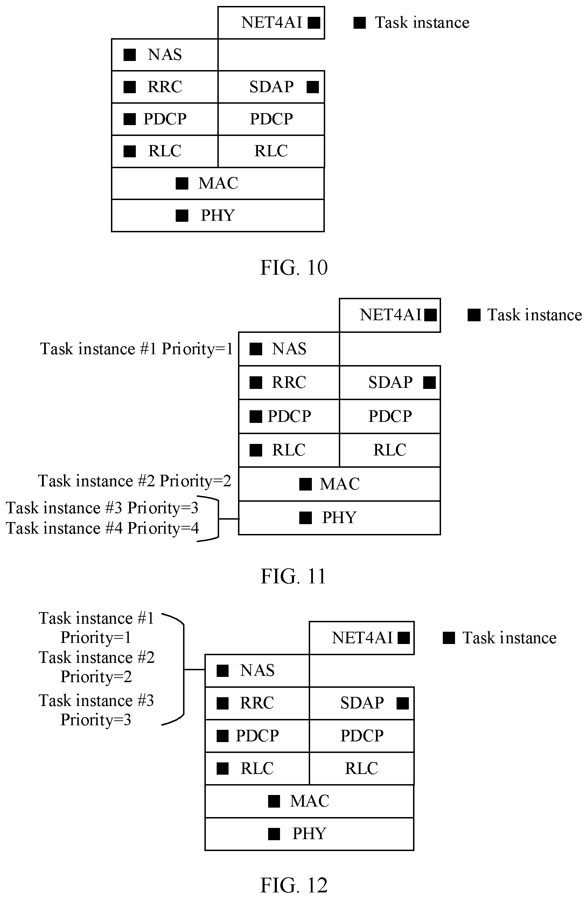

For example, FIG. 10 is a diagram of inter-layer priorities. As shown in FIG. 10, layers at which service trigger sources are located may be an RRC layer, a PDCP layer, an RLC layer, a MAC layer, a PHY layer, an SDAP layer, an application APP layer, and a non-access stratum (non-access stratum, NAS). FIG. 10 is merely an example, and a layer at which a service trigger source is located is not limited thereto. This is not limited. The configured inter-layer priorities may be "PHY>MAC>RRC>NAS>SDAP=PDCP=RLC", where ">" or "=" indicates priority levels. For example, "A>B" indicates that a QoS priority of an A service layer is higher than a QoS priority of a B service layer. "A=B" indicates that a QoS priority of an A service layer is equal to a QoS priority of a B service layer, or in other words, a QoS priority of an A service layer is the same as a QoS priority of a B service layer. In other words, a priority of the PHY layer is higher than a priority of the MAC layer, the priority of the MAC layer is higher than a priority of the RRC layer, the priority of the RRC layer is higher than a priority of the NAS layer, the priority of the NAS layer is higher than a priority of the SDAP layer, the priority of the SDAP layer is equal to a priority of the PDCP layer, and the priority of the PDCP layer is equal to a priority of the RLC layer.

In addition, the priorities may alternatively be represented by "<" to indicate priority levels. For example, "A<B" indicates that a QoS priority of an A service layer is lower than a QoS priority of B service layer. A form of a priority configuration is not limited in this application.

In a possible implementation, a service layer to which each service instance (task entity) belongs when the service instance is started may alternatively be predefined in a protocol.

In a possible implementation, the service layer to which each service instance (task entity) belongs when the service instance is started may alternatively be specified when the service instance is configured. For example, a service instance related to channel state information (channel state information, CSI) measurement belongs to the PHY layer, a service instance related to scheduler (scheduler) scheduling belongs to the MAC layer, and a service instance related to handover (handover, HO) belongs to the RRC layer.

For example, in FIG. 10, a NET4AI service instance may belong to a NET4AI layer, and a service instance of an AI4NET service may belong to the NAS layer/RRC layer/RLC layer/MAC layer/PHY layer/SDAP layer. The NET4AI layer is an APP layer to which the NET4AI service instance belongs.

The inter-layer priorities are configured, to enable the first communication apparatus to perform differentiated processing on data of a plurality of different service instances of a same service type, thereby improving communication effectiveness and reliability.

If the priority information indicates the priority of each of the P service modules, the priority of each of the P service modules may be referred to as a service module priority. Priorities of the P service modules may be the same or may be different. This is not limited.

For example, the P service modules are {a service module #1, a service module #2, a service module #3, ..., a service module #T}, and the priorities of the P service modules are the service module #1>the service module #2>the service module #3>...> the service module #N.

The service module priority is a QoS priority configured based on a service module to which a service instance belongs. In other words, the service module priority may be a QoS priority configuration performed based on a service module to which a service instance belongs. Details are as follows.

It should be understood that different service layers have different service modules. For example, at a PHY layer, a service module to which a service instance belongs may be a channel estimation and feedback module, a modulation technology module, a multiple access technology module, or the like. At a MAC layer, a service module to which a service instance belongs may be a scheduler, an access control module, a logical channel management module, a data buffer module, or the like. At an RRC layer, a service module to which a service instance belongs may be a system information management module, a connection management module, a configuration management module, or the like. For brevity, service modules at each service layer are not listed one by one herein. A service module to which a service instance belongs may be predefined in a protocol, or may be specified when a service is configured.

For example, configured service module priorities may be "a channel estimation and feedback module>a modulation technology module>a multiple access technology module>a scheduler>an access control module=a logical channel management module=a data buffer module". "A>B" indicates that a QoS priority of an A service module is higher than a QoS priority of a B service module. "A=B" indicates that a QoS priority of an A service module is the same as a QoS priority of a B service module.

In addition, the priorities may alternatively be represented by "<" to indicate priority levels. For example, "A<B" indicates that a QoS priority of an A service module is lower than a QoS priority of B service module. A form of a priority configuration is not limited in this application.

The priority information indicates the priority of each of the N service instances. Priorities of the N service instances may be the same or may be different. This is not limited.

For example, the N service instances are {a service instance #1, a service instance #2, a service instance #3, ..., a service instance #N}, and the priorities of the N service instances are the service instance #1>the service instance #2>the service instance #3>...>the service instance #N.

In a possible implementation, the N service instances are service instances in a trustlist, and the trustlist is predefined in a protocol or indicated by the network device. When the N service instances are the service instances in the trustlist, the priorities configured for the N service instances may be referred to as absolute priorities.

The absolute priority is a QoS priority configured for a service instance in the trustlist based on an identity (identity, ID) of the service instance. In other words, the absolute priority may be a QoS priority configuration preformed on the service instance in the trustlist based on an ID of the service instance. Details are as follows.

It should be noted that the absolute priorities configured for the service instances may alternatively be used for priority comparison between service layers. For example, a priority of a service instance of a computing service at a NAS layer may be compared with a priority of a service instance of a sensing service at a MAC layer, the priority of the service instance of the computing service at the NAS layer may be compared with a priority of a service instance of a computing service at the MAC layer, and priorities of service instances of a plurality of computing services at the NAS layer may be compared. In addition, the absolute priorities configured for the service instances may alternatively be used for priority comparison between different service types and between different service modules. In other words, the absolute priority is not related to a service type, a service layer, and a service module to which the service instance belongs.

The following uses an example in which the absolute priorities configured for the service instances may alternatively be used for priority comparison between service layers. It should be understood that the absolute priorities may also be similarly used for priority comparison between different service types and between different service modules. For brevity, examples are not provided one by one herein.

For example, FIG. 11 is a diagram of configured absolute priorities. As shown in FIG. 11, there are a plurality of different service instances. The plurality of different service instances may belong to different service types, or may belong to different service modules, or may belong to different service layers. For example, a service instance #1 may be a service instance of a computing service, a service instance #2 may be a service instance of a sensing service, a service instance #3 may be a service instance of an AI service, and a service instance #4 may be a service instance of a connection service. In addition, the service instance #1, the service instance #2, and the service instance #3 belong to different layers, and the service instance #3 and the service instance #4 belong to a same layer. In FIG. 11, the service instance #1 belongs to a NAS layer, the service instance #2 belongs to a MAC layer, and the service instance #3 and the service instance #4 both belong to a PHY layer. The priorities: a priority=1, a priority=2, a priority=3, and a priority=4 are respectively configured for the service instance #1, the service instance #2, the service instance #3, and the service instance #4, which may alternatively be represented by "task1 priority=1; task2 priority=2; task3 priority=3; and task4 priority=4", so as to indicate that the priority of the service instance #1 is higher than the priority of the service instance #2, the priority of the service instance #2 is higher than the priority of the service instance #3, and the priority of the service instance #3 is higher than the priority of the service instance #4. Alternatively, a form of the service instance #1>the service instance #2>the service instance #3>the service instance #4 may indicate the priorities of the service instances at the different service layers.

The absolute priorities are configured, to enable the first communication apparatus to directly perform differentiated processing based on the priorities of the service instances, thereby improving communication effectiveness and reliability.

In another possible manner, priorities configured for the N service instances that belong to a same service type and/or a same service layer and/or a same service module may be referred to as relative priorities.

The relative priority is also a QoS priority configured for a service instance based on an ID of the service instance. In other words, the relative priority is a QoS priority configuration performed based on an ID of a service instance. Details are as follows.

It should be noted that the relative priorities configured for the service instances may be priorities configured for the N service instances that belong to the same service type, or may be priorities configured for the N service instances that belong to the same service layer, or may be priorities configured for the N service instances that belong to the same service module. The relative priorities are used only for priority comparison between service instances that belong to a same service type and/or a same service layer and/or a same service module. For example, priorities of a plurality of computing service instances are compared only at a NAS layer, and are not compared with a priority of a computing service instance at an RRC layer. In other words, the relative priority is related to a service type, a service layer, and a service module to which the service instance belongs.

The following uses relative priorities configured for service instances that belong to a same service layer as an example for description. It should be understood that the service instances that belong to the same service layer may be compared with each other. In addition, when the relative priorities are configured for the plurality of service instances that belong to the same service type or the same service module, the service instances that belong to the same service type or the plurality of service instances that belong to the same service module may also be compared based on the priorities of the service instances. For brevity, examples are not provided one by one herein.

For example, FIG. 12 is a diagram of intra-layer configured relative priorities. As shown in FIG. 12, trigger sources of a plurality of different service instances belong to a same NAS layer, for example, a service instance #1, a service instance #2, and a service instance #3. The relative priorities are configured when the service instances are configured, for example, the service instance #1 priority=1, the service instance #2 priority=2, and the service instance #3 priority=3, which may alternatively be represented as "task1 priority=1; task2 priority=2; task3 priority=3; and task4 priority=4", so as to indicate that, at the NAS layer, the priority of the service instance #1 is higher than the priority of the service instance #2, and the priority of the service instance #2 is higher than the priority of the service instance #3. Alternatively, a form of the service instance #1>the service instance #2>the service instance #3 may indicate the priorities of the service instances at the same service layer.

The relative priorities are configured, to enable the first communication apparatus to perform differentiated processing on data of a plurality of different service instances of a same type and/or a same service layer and/or a same service module, thereby improving communication effectiveness and reliability.

If the priority information indicates the priority of each of the M grants, priorities of the M grants may be the same or may be different. This is not limited.

The priority of each of the M grants is determined based on a service instance that has a highest priority in a plurality of service instances corresponding to the grant. The service instance with the highest priority in the plurality of service instances may be determined based on the priorities of the service types, the priorities of the service layers, the priorities of the service modules, and the priorities of the service instances mentioned above. For details, refer to S420.

It can be learned from the foregoing that the transmission resource is sent by using the RF resource, and each transmission resource carries a service instance after scheduling (grant). In other words, the M grants correspond to at least one service instance carried on the M transmission resources, and at least one service instance carried on each of the M transmission resources may be a service instance dedicated to each transmission resource, or may be a service instance that is preferentially processed and determined from the plurality of service instances based on the priority information, or may be a service instance that is preferentially processed and determined based on the priority information from a plurality of service instances dedicated to each transmission resource.

It should be noted that the priorities may be configured in a form of "A>B", or "A<B", or "A=B", to indicate an order of a QoS priority of A and a QoS priority of B. The priority may alternatively be configured in a form of a rule, or may be configured in another form. This is not limited in this application.

S420: The first communication apparatus determines, based on the priority information, a resource #a for at least one service instance #a in the plurality of service instances, and processes a service instance #a by using the resource #a, where the resource #a is used to process the plurality of service instances.

The plurality of service instances are service instances in a first service instance set, and the first service instance set is predefined in a protocol, or the first service instance set is indicated by the network device. A service instance in the first service instance set is a service instance allowed to be processed.

Service types to which the plurality of service instances belong include a non-connection service type. A non-connection service includes services in a network, such as a network computing service, a network data processing service, a network AI service, and a network sensing service. The resource may include at least one of the following: a transmission resource and a computing resource. The service instance #a is an example of a first service instance, and the resource #a is an example of a first resource.

Optionally, the service types of the N service instances may also include a connection service. The connection service is only a service in which a network device provides a data transmission service for a terminal device and/or a network device, for example, a service like a user call or Internet access.

When the resource is shared, it is determined, based on the priorities of the service instances, the priorities of the service types to which the service instances belong, the priorities of the service layers to which the service instances belong, and the priorities of the service modules to which the service instances belong, to process the service instance #a by using the resource #a, where the processing includes transmission and/or computing. Details are as follows.

In a possible implementation, when the priority information indicates the priority of each of the plurality of service instances, or when the resource #a is used to process the N service instances, the N service instances are the service instances in the trustlist described in the related descriptions of S410. The first communication apparatus may process the service instance #a by using the resource #a based on the priorities of N service instances, where N≥2.

Specifically, the first communication apparatus allocates service instances to the resource #a in descending order of the priorities of the N service instances, until grants of the resource #a are fully occupied or the N service instances are exhausted.

For example, the N service instances in the trustlist that are to be processed by using the resource #a are {a service instance #1, a service instance #2, a service instance #3, ..., a service instance #N}, and a priority order of the N service instances is the service instance #1>the service instance #2>the service instance #3>...>the service instance #N. The first communication apparatus first allocates the service instance #1 to the resource #a; and if the grants of the resource are not fully occupied, the first communication apparatus allocates the service instance #2 to the resource #a; and if the grants of the resource are not fully occupied, the first communication apparatus allocates the service instance #3 to the resource #a, and so on, until the grants are fully occupied. It may be understood that a priority of the service instance #a ranks within first z positions in descending order of priorities of the plurality of service instances, where z≥1. If the resource #a is fully occupied by the service instance #1 to a service instance #n, the resource #a is used to process the service instance #1 to the service instance #n, where 1≤n ≤N. Because a service instance #n+1 to the service instance #N are not processed, the resource #a may further be used to continue to process the service instances in descending order of the priorities until the service instance #n+1 to the service instance #N are processed.

In addition, when there is only one service instance, that is, N=1, the resource #a may be used to process the service instance.

It should be noted that the resource #a may alternatively be used to process only one service instance with a highest priority. For example, the resource #a may alternatively be used to process only the service instance #1 and not process the service instance #2 to the service instance #N. The resource #a may alternatively be used only to process the service instance #1 to the service instance #n and not process the service instance #n+1 to the service instance #N. Whether the resource #a is repeatedly used is not limited.

In a possible implementation, when the priority information indicates the priority of each of the S service types, the first communication apparatus may process the service instance #a by using the resource #a based on the priorities of the S service types, where S≥2.

Specifically, the first communication apparatus allocates service instances to the resource #a in descending order of the priorities of the S service types to which the plurality of service instances belong, until grants of the resource #a are fully occupied or the plurality of service instances are exhausted.

For example, the S service types corresponding to the plurality of service instances to be processed by using the resource #a are {a service type #1, a service type #2, a service type #3, ..., a service type #S}, and a priority order of the S service types is the service type #1>service type #2>the service type #3>...>the service type #S. The first communication apparatus first allocates a service instance that belongs to the service type #1 to the resource #a; and if the grants of the resource are not fully occupied by the service instance that belongs to the service type #1, the first communication apparatus allocates a service instance that belongs to the service type #2 to the resource #a; and if the grants of the resource are not fully occupied, the first communication apparatus allocates a service instance that belongs to the service type #3 to the resource #a, and so on, until the grants are fully occupied. It may be understood that a priority of a service type of the service instance #a ranks within first s positions in descending order of priorities of service types of the plurality of service instances, where s≥1. If the resource #a is fully occupied by service instances that belong to the service type #1 to a service type #s, the resource #a is used to process the service instances that belong to the service type #1 to the service type #s, where 1≤s≤N. Because service instances that belong to a service type #s+1 to the service type #S are not processed, the resource #a may further be used to continue to process the service instances in descending order of the priorities until the service instances that belong to the service type #s+1 to the service type #S are processed.

In addition, when there is only one service type, that is, S=1, the resource #a may be used to process only a service instance corresponding to the service type.

It should be noted that the resource #a may alternatively be used to process only a service instance of a service type with a highest priority. For example, the resource #a may alternatively be used to process only a service instance of the service type #1 and not process service instances of the service type #2 to the service type #S. The resource #a may alternatively be used only to process the service instances of the service type #1 to the service type #s and not process the service instances of the service type #s+1 to the service type #S. Whether the resource #a is repeatedly used is not limited. In a possible implementation, when the priority information indicates the priority of each of the T service layers, the first communication apparatus may process the service instance #a by using the resource #a based on the priorities of the T service layers, where T≥2.

Specifically, the first communication apparatus allocates service instances to the resource #a in descending order of the priorities of the T service layers to which the plurality of service instances belong, until grants of the resource #a are fully occupied or the plurality of service instances are exhausted.

For example, the T service layers corresponding to the plurality of service instances to be processed by using the resource #a are {a service layer #1, a service layer #2, a service layer #3, ..., a service layer #T}, and a priority order of the T service layers is the service layer #1>the service layer #2>the service layer #3>...>the service layer #T. The first communication apparatus first allocates a service instance that belongs to the service layer #1 to the resource #a; and if the grants of the resource are not fully occupied by the service instance that belongs to the service layer #1, the first communication apparatus allocates a service instance that belongs to the service layer #2 to the resource #a; and if the grants of the resource are not fully occupied, the first communication apparatus allocates a service instance that belongs to the service layer #3 to the resource #a, and so on, until the grants are fully occupied. It may be understood that a priority of a service layer of the service instance #a ranks within first t positions in descending order of priorities of service layers of the plurality of service instances, where t≥1. If the resource #a is fully occupied by service instances that belong to the service layer #1 to a service layer #t, the resource #a is used to process the service instances that belong to the service layer #1 to the service layer #t, where 1≤t≤T. Because service instances that belong to a service layer #t+1 to the service layer #T are not processed, the resource #a may further be used to continue to process the service instances in descending order of the priorities until the service instances that belong to the service layer #t+1 to the service layer #T are processed.

In addition, when there is only one service layer, that is, T=1, the resource #a may be used to process only a service instance corresponding to the service layer.

It should be noted that the resource #a may alternatively be used to process only a service instance of a service layer with a highest priority. For example, the resource #a may alternatively be used to process only a service instance of the service layer #1 and not process service instances of the service layer #2 to the service layer #T. The resource #a may alternatively be used only to process the service instances of the service layer #1 to the service layer #t and not process the service instances of the service layer #t+1 to the service layer #T. Whether the resource #a is repeatedly used is not limited. In a possible implementation, when the priority information indicates the priority of each of the P service modules, the first communication apparatus may process the service instance #a by using the resource #a based on the priorities of the P service modules, where P≥2.

Specifically, the first communication apparatus allocates service instances to the resource #a in descending order of the priorities of the P service modules to which the plurality of service instances belong, until grants of the resource #a are fully occupied or the plurality of service instances are exhausted.

For example, the P service modules corresponding to the plurality of service instances to be processed by using the resource #a are {a service module #1, a service module #2, a service module #3, ..., a service module #P}, and a priority order of the P service modules is the service module #1>the service module #2>the service module #3>...>the service module #P. The first communication apparatus first allocates a service instance that belongs to the service module #1 to the resource #a; and if the grants of the resource are not fully occupied by the service instance that belongs to the service module #1, the first communication apparatus allocates a service instance that belongs to the service module #2 to the resource #a; and if the grants of the resource are not fully occupied, the first communication apparatus allocates a service instance that belongs to the service module #3 to the resource #a, and so on, until the grants are fully occupied. It may be understood that a priority of a service module of the service instance #a ranks within first p positions in descending order of priorities of service modules of the plurality of service instances, where p≥1. If the resource #a is fully occupied by service instances that belong to the service module #1 to a service module #p, the resource #a is used to process the service instances that belong to the service module #1 to the service module #p, where 1≤p≤P. Because service instances that belong to a service module #p+1 to the service module #P are not processed, the resource #a may further be used to continue to process the service instances in descending order of the priorities until the service instances that belong to the service module #p+1 to the service module #P are processed.

In addition, when there is only one service module, that is, P=1, the resource #a may be used to process only a service instance corresponding to the service module.

It should be noted that the resource #a may alternatively be used to process only a service instance of a service module with a highest priority. For example, the resource #a may alternatively be used to process only a service instance of the service module #1 and not process service instances of the service layer #2 to the service layer #T. The resource #a may alternatively be used only to process the service instances of the service module #1 to the service module #p and not process the service instances of the service module #p+1 to the service module #P. Whether the resource #a is repeatedly used is not limited. In a possible implementation, when the resource #a is an RF resource and the priority information indicates the priority of each of the M grants, the first communication apparatus may process the service instance #a by using the resource #a based on the priorities of the M grants, where M≥2.

In some embodiments, the priority of the grant is determined based on a service instance with a highest priority in the at least one service instance #a in the grant. It can be learned from the foregoing that the priority of the service instance #a in the grant may be a priority of a service type to which the service instance belongs, a priority of a service layer to which the service instance belongs, a priority of a service module to which the service instance belongs, and a priority of the service instance. Therefore, the priority of the grant may be a highest priority of a service type to which a service instance in the at least one service instance #a belongs and/or a service layer to which the service instance belongs and/or a service module to which the service instance belongs and/or the service instance.

For example, a grant 1 is used only to transmit a service instance of a computing service, and a grant 2 is used only to transmit a service instance of an AI service. After data is encapsulated in the two grants, the data is delivered to an RF antenna. In this case, the grant 1 and the grant 2 share one RF resource. When a priority of the AI service is lower than a priority of the computing service, a priority value corresponding to to-be-transmitted data with a highest priority in the to-be-transmitted data of the computing task in the grant 1 is compared with a priority value corresponding to to-be-transmitted data with a highest priority in the to-be-transmitted data of the AI task in the grant 2, to determine to first allocate the RF resource to a grant with a higher priority for transmission. For example, if the priority value of the highest priority in the grant 1 is equal to 2, and the priority value of the highest priority in the grant 2 is equal to 1, the grant 1 is preferentially transmitted because the priority of 1 is higher than the priority of 2.

Specifically, the first communication apparatus allocates service instances to the resource #a in descending order of the priorities of the M grants to which the plurality of service instances belong, until the plurality of service instances are exhausted.

For example, the service instance #a processed by using the resource #a is a service instance corresponding to a grant with a highest priority in the M grants corresponding to the plurality of service instances. In addition, the resource #a may further be used to continue to process a service instance corresponding to a grant with a highest priority in remaining (M-1) grants, until all the M grants are exhausted.

In addition, when there is only one grant, that is, M=1, the resource #a may be used to process only a service instance corresponding to the grant.

It should be noted that the resource #a may alternatively be used to process only the service instance corresponding to the grant with the highest priority in the M grants and not process the remaining (M-1) grants. Whether the resource #a is repeatedly used is not limited in this application.

It should be noted that the priorities of the S service types, the priorities of the T service layers, the priorities of the P service modules, and the priorities of the N service instances may be used in any combination.

The following describes, by using examples, manners of allocating the resource based on the priorities of the S service types, the priorities of the T service layers, the priorities of the P service modules, and the priorities of the N service instances in the foregoing related descriptions of S420.

For example, when the priority information indicates the priority of each of the S service types and the priority information indicates the priority of each of the T service layers, the first communication apparatus may allocate the service instances to the resource #a based on the priority information in descending order of the priorities of the service types to which the plurality of service instances belong, until the grants of the resource #a are fully occupied or the plurality of service instances are exhausted. For a plurality of service instances that belong to a same service type, the first communication apparatus may further allocate the service instances to the resource #a based on the priority information in descending order of priorities of service layers to which the plurality of service instances belong, until the grants of the resource #a are fully occupied or the plurality of service instances are exhausted.

For example, when the priority information indicates the priority of each of the S service types and the priority information indicates the priority of each of the P service modules, the first communication apparatus may allocate the service instances to the resource #a based on the priority information in descending order of the priorities of the service types to which the plurality of service instances belong, until the grants of the resource #a are fully occupied or the plurality of service instances are exhausted. For a plurality of service instances that belong to a same service type, the first communication apparatus may further allocate the service instances to the resource #a based on the priority information in descending order of priorities of service modules to which the plurality of service instances belong, until the grants of the resource #a are fully occupied or the plurality of service instances are exhausted.

For example, when the priority information indicates the priority of each of the S service types, the priority of each of the T service layers, the priority of each of the P service modules, and the priority of each of the N service instances, the first communication apparatus may allocate the service instances to the resource #a based on the priority information in descending order of the priorities of the service types to which the plurality of service instances belong, until the grants of the resource #a are fully occupied or the plurality of service instances are exhausted. For a plurality of service instances that belong to a same service type, the first communication apparatus may further allocate the service instances to the resource #a based on the priority information in descending order of priorities of service layers to which the plurality of service instances belong, until the grants of the resource #a are fully occupied or the plurality of service instances are exhausted. For a plurality of service instances that belong to a same service layer, the first communication apparatus may further allocate the service instances to the resource #a based on the priority information in descending order of priorities of service modules to which the plurality of service instances belong, until the grants of the resource #a are fully occupied or the plurality of service instances are exhausted. For a plurality of service instances in a same service module, the first communication apparatus may further allocate the service instances to the resource #a based on the priority information in descending order of priorities of the plurality of service instances, until the grants of the resource #a are fully occupied or the plurality of service instances are exhausted.

It should be noted that because the priorities of the S service types, the priorities of the T service layers, the priorities of the P service modules, and the priorities of the N service instances may be used in any combination, there are many use manners, which are not listed one by one herein. It should be understood that a person skilled in the art may allocate the plurality of service instances to the resource #a in descending order of the priorities of the S service types, the priorities of the T service layers, the priorities of the P service modules, and the priorities of the N service instances based on an actual situation, until the grants of the resource #a are fully occupied or the plurality of service instances are exhausted.

It should be further noted that the priority order may be in descending order, or may be in ascending order. When the priorities are arranged in ascending order, a service instance with a higher priority still needs to be first allocated to the resource #a.

The following describes in detail by using an example in which when the resource is the transmission resource and the transmission resource is shared, and the transmission resource (the resource #a) is used to process n service instances, the first communication apparatus determines, based on priorities of service types to which the n service instances belong, priorities of service layers to which the n service instances belong, priorities of service modules to which the n service instances belong, and priorities of v service instances in the n service instances, a service #a processed by using the transmission resource, and transmits data of the service #a.

For example, the first communication apparatus may allocate, based on the priorities of the service types to which the n service instances belong, the n service instances to the resource #a in descending order of the priorities of the service types to which the n service instances belong.

For example, when the first communication apparatus has one available transmission resource at a moment, the first communication apparatus determines, based on the configured priorities "the connection type>the AI type (AI4NET)>the computing type>the data processing type>the sensing type>the AI type (NET4AI)" of the service types, that a service type processed by using the transmission resource is the connection type. If data of a service instance that belongs to the connection type does not fully occupy the resource, or there is the remaining resource when the resource is granted (granted) to the connection-type service, the first communication apparatus determines that a service corresponding to the remaining resource of the resource is an AI-type (AI4NET) service. The others follow the same rule. The first communication apparatus allocates, based on the priorities of the service types, the resource to the service instance that needs to be processed, and transmits the data of the service data.

It should be understood that if the transmission resource is fully occupied by data of a connection-type service instance, data transmitted by the first communication apparatus is the data of the connection-type service instance. If the transmission resource is not fully occupied by the data of the connection-type service instance, the transmission resource further allocates the remaining resource to data of the AI-type (AI4NET) service instance with a second highest priority. If the transmission resource is fully occupied by the data of the connection-type service instance and the data of the AI-type (AI4NET) service instance, data transmitted by the first communication apparatus is the data of the connection-type service instance and the data of the AI-type (AI4NET) service instance. The others follow the same rule. Data transmitted by the first communication apparatus may alternatively be data of a connection-type service instance, data of an AI (AI4NET)-type service instance, data of a computing-type service instance, or may be data of a connection-type service instance, data of an AI (AI4NET)-type service instance, data of a computing-type service instance, data of a data processing-type service instance, or the like. For brevity, details are not described herein again. In addition, if the n service instances are not completely transmitted, the remaining service instances may be further transmitted by using the transmission resource based on priorities of service types to which the service instances belong.

For a plurality of different service instances of a same service type, for example, a plurality of different computing service instances in a computing-type service, transmission resource allocation and use may be further performed based on the following example.

For example, the first communication apparatus may allocate, based on priorities of service layers to which the service instances belong, the n service instances to the resource #a in descending order of the priorities of the service layers to which the service instances belong.

For example, when the first communication apparatus has one available transmission resource at a moment, the first communication apparatus determines, based on the configured priorities "PHY>MAC>RRC>NAS>SDAP=PDCP=RLC" of the service layers to which the service instances belong, that services processed by using the transmission resource are a plurality of service instances that belong to the PHY layer. If the plurality of service instances that belong to the PHY layer do not fully occupy the transmission resource, or there is the remaining resource when the transmission resource is granted (granted) to the plurality of service instances that belong to the PHY layer, the first communication apparatus determines that services processed by using the remaining resource of the transmission resource are a plurality of service instances that belong to the MAC layer. The others follow the same rule. The first communication apparatus allocates, based on the priorities of the service layers to which the service instances belong, the transmission resource to the plurality of service instances at the service layer for processing, and transmits the plurality of service instances. In addition, if the n service instances are not completely transmitted, the remaining service instances may be further transmitted by using the transmission resource based on priorities of service layers to which the service instances belong.

It should be understood that if the transmission resource is fully occupied by the plurality of service instances that belong to the PHY layer, data processed by the first communication apparatus is data of the plurality of service instances that belong to the PHY layer. If the transmission resource is not fully occupied by the data of the plurality of service instances that belong to the PHY layer, the resource further allocates the remaining resource to data of a plurality of service instances that belong o the MAC layer with a second highest priority. If the resource is fully occupied by the data of the plurality of service instances that belong to the PHY layer and the data of the plurality of service instances that belong to the MAC layer, data transmitted by the first communication apparatus is the data of the service instances that belong to the PHY layer and the data of the service instances that belong to the MAC layer. The others follow the same rule. A service instance transmitted by the first communication apparatus may alternatively be data of a service instance that belongs to the PHY layer, data of a service instance that belongs to the MAC layer, or data of a service instance that belongs to the RRC layer, or may be data of a service instance that belongs to a PHY layer, data of a service instance that belongs to the MAC layer, data of a service instance that belongs to the RRC layer, data of a service instance that belongs to the NAS layer, or the like. For brevity, details are not described herein again.

For a plurality of different service instances at a same service layer, for example, a plurality of computing service instances at a PHY layer, transmission resource allocation and use may be further performed based on the following example.

For example, the first communication apparatus may allocate, based on priorities of service modules to which the service instances belong, the n service instances to the resource #a in descending order of the priorities of the service modules to which the service instances belong.

For example, when the first communication apparatus has one available transmission resource at a moment, the first communication apparatus determines, based on the configured priorities "a channel estimation and feedback module>a modulation technology module>a multiple access technology module" of the service modules to which the service instances belong, that services processed by using the transmission resource are a plurality of service instances that belong to the channel estimation and feedback module. If data of the plurality of service instances that belong to the channel estimation and feedback module does not fully occupy the transmission resource, or there is the remaining resource when the transmission resource is granted (granted) to the plurality of service instances that belong to the channel estimation and feedback module, the first communication apparatus determines that services processed by using the remaining resource of the transmission resource are a plurality of service instances that belong to the modulation technology module. The others follow the same rule. The first communication apparatus allocates, based on the priorities of the service modules to which the service instances belong, the transmission resource to the plurality of service instances in the service module for processing, and transmits data of the plurality of service instances. In addition, if the n service instances are not completely transmitted, the remaining service instances may be further transmitted by using the transmission resource based on priorities of service modules to which the service instances belong.

For a plurality of different service instances that belong to a same service module, that is, v service instances in the n service instances, for example, v computing service instances in the channel estimation and feedback module, transmission resource allocation and use are performed based on the following example.

For example, the first communication apparatus may allocate, based on priorities of the v service instances, the v service instances to the resource #a in descending order of the priorities of the v service instances.

For example, when the first communication apparatus has one available transmission resource and needs to transmit data of a service instance #1, data of a service instance #2, and data of a service instance #3 at a moment, where the service instance #1, the service instance #2, and the service instance #3 all belong to a same service module, for example, the service instance #1, the service instance #2, and the service instance #3 all belong to the channel estimation and feedback module, the first communication apparatus may determine, based on priorities of the service instances in the same service module, data, of a service instance, that is preferentially transmitted, where data of a service instance with a higher priority is transmitted earlier than data of a service instance with a lower priority.

For example, the priorities configured for the service instances in the channel estimation and feedback module are that a priority of the service instance #1 is higher than a priority of the service instance #2, and the priority of the service instance #2 is higher than a priority of the service instance #3. The first communication apparatus preferentially transmits data of the service instance #1. If the transmission resource is not fully occupied by the data of the service instance #1, or there is the remaining resource when the transmission resource is granted (granted) to the service instance #1, the first communication apparatus determines that a service processed by using the remaining resource of the transmission resource is the service instance #2. The others follow the same rule. The first communication apparatus allocates, based on the priorities of the service instances, the transmission resource to the service instance for processing, and transmits data of the service instance. In addition, if the three service instances are not completely transmitted, the remaining service instances may be further transmitted by using the transmission resource based on priorities of service modules to which the service instances belong. For example, if the resource #a is used to transmit the service instance #1, the resource #a can further be used to transmit the service instance #2 based on a fact that the priority of the service instance #2 is higher than the priority of the service instance #3.

It should be understood that if the transmission resource is fully occupied by the data of the service instance #1, data transmitted by the first communication apparatus is the data of the service instance #1. If the transmission resource is not fully occupied by the data of the service instance #1, the transmission resource further allocates the remaining resource to data of the service instance #2 with a second highest priority. If the transmission resource is fully occupied by the data of the service instance #1 and the data of the service instance #2, data transmitted by the first communication apparatus is the data of the service instance #1 and the data of the service instance #2. The others follow the same rule. Data transmitted by the first communication apparatus may alternatively be data of the service instance #1, data of the service instance #2, data of the service instance #3, or the like. For brevity, details are not described herein again.

It should be noted that when the priorities of the service types, the priorities of the service layers, the priorities of the service modules, and the priorities of the service instances mentioned above are the same, the first communication apparatus performs random processing on the service instances with the same priority. For example, for a plurality of computing service instances with a same priority, the first communication apparatus may randomly allocate, to any one of the plurality of computing service instances with the same priority, a transmission resource shared by the plurality of service instances, and transmit data of any computing service instance.

For example, the first communication apparatus may determine, based on the absolute priority, the service #a processed by using the resource #a, and transmit the data of the service #a. The service #a is one or more of a plurality of different service instances of different service types. For example, the service is one or more of a plurality of computing services of a computing-type service.

For example, when the first communication apparatus has one available transmission resource and data of a service instance #1, data of a service instance #2, data of a service instance #3, and data of a service instance #4 need to be transmitted at a moment, the first communication apparatus determines, based on configured absolute priorities "the service instance #1 priority=1; the service instance #2 priority=2; the service instance #3 priority=3; and the service instance #4 priority=4", that the service processed by using the transmission resource is the service instance #1. If the transmission resource is not fully occupied by the data of the service instance #1, or there is the remaining resource when the transmission resource is granted (granted) to the service instance #1, the first communication apparatus determines that a service processed by using the remaining resource of the transmission resource is the service instance #2. The others follow the same rule. The first communication apparatus allocates, based on the absolute priorities, the transmission resource to the plurality of service instances, and transmits data of the plurality of service instances.

It should be understood that if the transmission resource is fully occupied by the data of the service instance #1, data transmitted by the first communication apparatus is the data of the service instance #1. If the transmission resource is not fully occupied by the data of the service instance #1, the transmission resource further allocates the remaining resource to data of the service instance #2 with a second highest priority. If the transmission resource is fully occupied by the data of the service instance #1 and the data of the service instance #2, data transmitted by the first communication apparatus is the data of the service instance #1 and the data of the service instance #2. The others follow the same rule. Data transmitted by the first communication apparatus may alternatively be data of the service instance #1, data of the service instance #2, data of the service instance #3, or the like. For brevity, details are not described herein again.

When w service instances in the n service instances are service instances in the trustlist in the related descriptions of S410, transmission resource allocation and use may be further performed on the w service instances based on the following example.

For example, the first communication apparatus has one available transmission resource at a moment, and priorities are configured for the w service instances, where 1≤w≤n. The first communication apparatus may determine, based only on absolute priorities of the w service instances, a service instance processed by using the transmission resource, and for a service instance other than the w service instances, may determine, based on any combination of a priority of a service type, a priority of a service layer, a priority of a service module, and a priority of the service instance other than the w service instances, a service instance processed by using the one transmission resource.

One or more service instances of a plurality of different service instances of different types of services that are processed by using the resource may be directly determined by using the absolute priorities, and data of the one or more service instances is directly transmitted. Compared with a manner in which a service instance in the plurality of service instances that is preferentially processed can be determined based only on a priority of a service type, a priority of a service layer, a priority of a service module, and a priority of a service instance other than the w service instances, a manner in which the data of the service instance processed by using the resource is determined based on the absolute priorities is more flexible.

It should be noted that after resource allocation is completed, the first communication apparatus immediately sends the data of the service instance that needs to be sent by using the resource. It may be understood that the first communication apparatus sends, within one transmission time interval (transmission time interval, TTI), the data of the service instance that needs to be sent by using the resource.

It should be noted that "processing" in this application includes transmitting or computing the data of the service instance in the service A by using the resource A, for example, transmitting the data of the service instance by using the transmission resource, transmitting the data of the service instance by using the RF resource, and computing the data of the service by using the computing resource. This is not limited in this application.

It should be noted that when the plurality of service instances need to be computed, identifiers are configured for the plurality of service instances. When the plurality of service instances need to be transmitted, the plurality of service instances are carried on a plurality of data radio bearers (data radio bearers, DRBs) based on a mapping relationship. When the plurality of service instances need to be computed, the priorities configured for the plurality of service instances may be configured based on the identifiers of the plurality of service instances. When the plurality of service instances need to be transmitted, the priorities configured for the plurality of service instances may be configured based on identifiers of the DRBs carrying the plurality of service instances. In other words, when the service instances are used for computing, IDs of the service instances are the identifiers of the service instances; and when the service instances are used for transmission, IDs of the service instances are the identifiers of the DRBs carrying the service instances.

In a possible implementation, the resource is a dedicated resource. Therefore, after the service instance to be preferentially processed is determined based on the priority information, the service instance dedicated to the resource is determined from the service instance to be preferentially processed. For details about the service instance determined when the resource is dedicated, refer to the method 500.

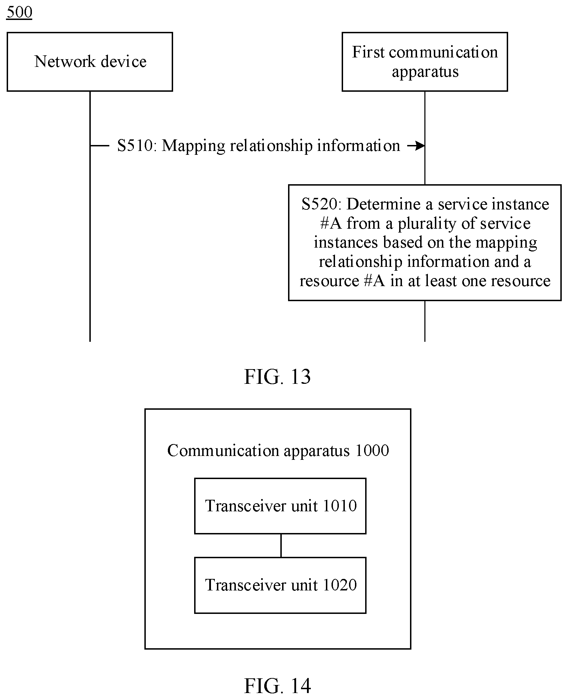

FIG. 13 is a schematic flowchart of a communication method 500 according to an embodiment of this application.

The following provides, with reference to FIG. 13, a method procedure of resource allocation and use in a case in which a resource is dedicated. As shown in FIG. 13, the method 500 may include the following plurality of steps.

S510: A network device sends mapping relationship information to a first communication apparatus. Correspondingly, the first communication apparatus receives the mapping relationship information from the network device.

The first communication apparatus may be a terminal device, or may be a network device. The mapping relationship information indicates at least one of the following: a correspondence between at least one resource and at least one service type, a correspondence between at least one resource and at least one service layer, a correspondence between at least one resource and at least one service module, and a correspondence between at least one resource and at least one service instance. The resource is a transmission resource and/or a computing resource.

In a possible implementation, the correspondence between the at least one resource and the at least one service type, the correspondence between the at least one resource and the at least one service layer, the correspondence between the at least one resource and the at least one service module, and the correspondence between the at least one resource and the at least one service instance may alternatively be predefined in a protocol.

For example, when the resource is the transmission resource, a configured correspondence between the transmission resource and a service type may be: {a transmission resource, a service type}, for example, {a transmission resource 1, a connection type}, {a transmission resource 2, a computing type}, and {a transmission resource 3, an AI type}.

For example, when the resource is the computing resource, a configured correspondence between the computing resource and a service type may be: {a computing resource, a service type}, for example, {a computing resource 1, a connection type}, {a computing resource 2, a computing type}, and {a computing resource 3, an AI type}.

It should be noted that for brevity, the foregoing does not list correspondences between the transmission resource and/or the computing resource and a service layer, between the transmission resource and/or the computing resource and a service module, and between the transmission resource and/or the computing resource and a service instance one by one. However, a person skilled in the art should understand that correspondences similar to that between the transmission resource and/or the computing resource and the service type are configured.

It should be noted that the foregoing configured correspondence between the transmission resource and the service type or the correspondence between the computing resource and the service type is merely an example. The correspondence may alternatively exist in a form of a mapping relationship table, or may exist in a form of a corresponding rule. This is not limited in this application.

The network device may configure, for different first communication apparatuses, a same correspondence between at least one resource and at least one service type, a same correspondence between at least one resource and at least one service layer, a same correspondence between at least one resource and at least one service module, and a same correspondence between at least one resource and at least one service instance, or may configure different correspondences between at least one resource and at least one service type, different correspondences between at least one resource and at least one service layer, different correspondences between at least one resource and at least one service module, and different correspondences between at least one resource and at least one service instance.

S520: The first communication apparatus determines a service instance #A from a plurality of service instances based on the mapping relationship information and a resource #A in the at least one resource.

Service types to which the plurality of service instances belong include a non-connection service type and a connection service type. The service instance #A is an example of a first service instance. The resource #A is an example of a first resource. The resource includes the at least one of the transmission resource or the computing resource.

The plurality of service instances are service instances in a first service instance set, and the first service instance set is predefined in a protocol, or the first service instance set is indicated by the network device. A service instance in the first service instance set is a service instance allowed to be processed.

The service types to which the plurality of service instances belong include the non-connection service type. A non-connection service includes service instances in a network, such as a network computing service, a network data processing service, a network AI service, and a network sensing service. The resource may include the at least one of the following: the transmission resource and the computing resource. The service instance #A is an example of a first service instance, and the resource #A is an example of a first resource.

Optionally, the service types of the N services may also include a connection service. The connection service is only a service in which a network device provides a data transmission service for a terminal device, for example, a service like a user call or Internet access.

When the resource is dedicated, the first communication apparatus determines, based on the mapping relationship information, the service instance #A processed by using the resource #A, where processing includes transmission and/or computing. Details are as follows:

In a possible implementation, when there is the correspondence between the at least one resource and the at least one service type, the first communication apparatus determines, based on the mapping relationship information, a service type #A corresponding to the resource #A, and determines, from the plurality of service instances, the service instance #A that belongs to the service type #A, where the at least one service type includes the service type #A.

In a possible implementation, when there is the correspondence between the at least one resource and the at least one service layer, the first communication apparatus determines, based on the mapping relationship information, a service layer #A corresponding to the resource #A, and determines, from the plurality of service instances, the service instance #A that belongs to the service layer #A, where the at least one service layer includes the service layer #A.

In a possible implementation, when there is the correspondence between the at least one resource and the at least one service module, the first communication apparatus determines, based on the mapping relationship information, a service module #A corresponding to the resource #A, and determines, from the plurality of service instances, the service instance #A that belongs to the service module #A, where the at least one service module includes the service module #A.

In a possible implementation, when there is the correspondence between the at least one resource and the at least one service instance, the first communication apparatus determines the service instance #A based on the mapping relationship information, and determines the service instance #A from the plurality of service instances, where the at least one service instance includes the service instance #A.

The following uses a correspondence between a transmission resource and a service type as an example for description.

For example, after receiving the mapping relationship information sent by the network device, the first communication apparatus stores the correspondence between the at least one resource and the at least one service type. When the first communication apparatus has an available resource at a moment, the first communication apparatus needs to first determine a type of resource to which the resource belongs. After determining the type of the resource, the first communication apparatus determines, based on the correspondence between the resource and the service type, a service type corresponding to the resource of this type. The first communication apparatus processes, by using the determined resource, a service of the service type corresponding to the determined resource. The resource may be at least one type of resource of a transmission resource and a computing resource. The service type may be a connection service, or may be a non-connection service. The non-connection service is the network computing service, the network AI service, the network sensing service, or the like described above.

For example, the resource is the transmission resource, and the correspondence that is between the transmission resource and the service type and stored by the first communication apparatus is {a transmission resource 1, a connection type}, {a transmission resource 2, a computing type}, {a transmission resource 3, an AI type}, ..., {a transmission resource M, a sensing type}. At a moment, the first communication apparatus has an available transmission resource. After determining that the transmission resource is the transmission resource 1, the first communication apparatus determines, based on the correspondence between the transmission resource and the service type, that a service type corresponding to the transmission resource 1 is the connection type. The first communication apparatus transmits, by using the transmission resource 1, data of a service corresponding to the connection-type service.

For example, the resource is the transmission resource, and the correspondence that is between the transmission resource and the service type and stored by the first communication apparatus is {a transmission resource 1, a connection type}, {a transmission resource 2, a computing type}, {a transmission resource 3, an AI type}, ..., {a transmission resource M, a sensing type}. At a moment, the first communication apparatus has a service instance to be transmitted. The first communication apparatus determines, based on the correspondence between the transmission resource and the service type, the transmission resource M corresponding to the sensing type to which the service instance belongs. The first communication apparatus transmits the service instance by using the transmission resource M.

When the transmission resource is dedicated, the correspondence between the transmission resource and the service type is configured. In a subsequent data transmission process, data of each service type has a corresponding dedicated transmission resource, so that the transmission resource is preempted by data of another service type is avoided, thereby improving communication reliability.

For example, the resource is the computing resource, and the correspondence that is between the computing resource and the service type and stored in the first communication apparatus is {a computing resource 1, a connection type}, {a computing resource 2, a computing type}, {a computing resource 3, an AI type}, ..., and {a computing resource M, a sensing type}. At a moment, the first communication apparatus has an available computing resource. After determining that the computing resource is the computing resource 1, the first communication apparatus determines, based on the correspondence between the computing resource and the service type, that a service type corresponding to the computing resource 1 is the connection type. The first communication apparatus computes, by using the computing resource 1, data of a service corresponding to the connection-type service.

For example, the resource is the computing resource, and the correspondence that is between the computing resource and the service type and stored in the first communication apparatus is {a computing resource 1, a connection type}, {a computing resource 2, a computing type}, {a computing resource 3, an AI type}, ..., and {a computing resource M, a sensing type}. At a moment, the first communication apparatus has a service instance to be transmitted. The first communication apparatus determines, based on the correspondence between the computing resource and the service type, the computing resource M corresponding to the sensing type to which the service instance belongs. The first communication apparatus computes the service instance by using the computing resource M.

When the computing resource is dedicated, the correspondence between the computing resource and the service type is configured. In a subsequent data computing process, data of each service type has a corresponding dedicated computing resource, so that the computing resource is preempted by data of another service type is avoided, thereby improving computing reliability.

It should be noted that the correspondence between the at least one resource and the at least one service type, the correspondence between the at least one resource and the at least one service layer, the correspondence between the at least one resource and the at least one service module, and the correspondence between the at least one resource and the at least one service instance that are indicated by the mapping relationship information may be used in any combination. In other words, when the resource is dedicated, the resource may be a resource dedicated to some service types and/or some service layers and/or some service modules and/or some service instances.

The following describes, by using an example, a manner of performing resource allocation on the resource based on a combination of the correspondence between the at least one resource and the at least one service type, the correspondence between the at least one resource and the at least one service layer, the correspondence between the at least one resource and the at least one service module, and the correspondence between the at least one resource and the at least one service instance that are indicated by the mapping relationship information in the foregoing related descriptions of S420.

For example, when the mapping relationship information indicates the correspondence between the at least one resource and the at least one service type, and the mapping relationship information indicates the correspondence between the at least one resource and the at least one service layer, a first service type and a first service layer that correspond to the resource #A are determined based on the mapping relationship information, and the service instance #A that belongs to the first service type that the first service layer are determined from the plurality of service instances, where the at least one service type includes the first service type, and the at least one service layer includes the first service layer.

For example, when the mapping relationship information indicates the correspondence between the at least one resource and the at least one service type, the correspondence between the at least one resource and the at least one service layer, and the correspondence between the at least one resource and the at least one service instance, a first service type corresponding to the resource #A is determined based on the mapping relationship, and a plurality of third service instances that belong to the first service type are determined from the plurality of service instances, where the at least one service type includes the first service type; a first service layer corresponding to the resource #A is determined based on the mapping relationship, and a plurality of second service instances that belong to the first service layer are determined from the plurality of third service instances, where the at least one service layer includes the first service layer; and the service instance #A corresponding to the resource #A is determined from the plurality of second service instances based on the mapping relationship, where the at least one service instance includes the service instance #A.

For example, when the mapping relationship information indicates the correspondence between the at least one resource and the at least one service type, the correspondence between the at least one resource and the at least one service layer, the correspondence between the at least one resource and the at least one service module, and the correspondence between the at least one resource and the at least one service instance, a first service type corresponding to the resource #A is determined based on the mapping relationship, and a plurality of fourth service instances that belong to the first service type are determined from the plurality of service instances, where the at least one service type includes the first service type; a first service layer corresponding to the resource #A is determined based on the mapping relationship, and a plurality of third service instances that belong to the first service layer are determined from the plurality of service instances, where the at least one service layer includes the first service layer; a first service module corresponding to the resource #A is determined based on the mapping relationship, and a plurality of second service instances that belong to the first service module are determined from the plurality of third service instances, where the at least one service module includes the first service module; and the service instance #A corresponding to the resource #A is determined from the plurality of second service instances based on the mapping relationship, where the at least one service instance includes the service instance #A.

It should be noted that because the correspondence between the at least one resource and the at least one service type, the correspondence between the at least one resource and the at least one service layer, the correspondence between the at least one resource and the at least one service module, and the correspondence between the at least one resource and the at least one service instance that are indicated by the mapping relationship information may be used in any combination, there are many use manners, which are not listed one by one herein. It should be understood that a person skilled in the art may allocate, based on content indicated by the mapping relationship information and an actual situation, the service instance #A in the at least one service instance to the resource #A that is in the plurality of resources and that corresponds to the service instance, or allocate the resource #A in the at least one resource to the service instance #A that is in the plurality of service instances and that corresponds to the resource #A.

In a possible implementation, the first communication apparatus determines, based on the mapping relationship information, a plurality of service instances #A corresponding to the resource #A, and then determines, based on the content indicated by the priority information in the method 400, a service instance that is preferentially processed in the plurality of service instances #A. For details about how to determine, based on the priorities, the service instance that is preferentially processed in the plurality of service instances #A, refer to the method 400. The foregoing describes in detail the communication methods provided in this application. The following describes communication apparatuses provided in this application.

To implement functions of the communication apparatuses (for example, a network device and a terminal device) in embodiments of this application, each communication apparatus may implement corresponding functions by using a hardware structure, a software module, or a combination of a hardware structure and a software module.

FIG. 14 is a block diagram of a communication apparatus 1000 according to an embodiment of this application. As shown in FIG. 14, the apparatus 1000 may include a transceiver unit 1010 and a processing unit 1020. The transceiver unit 1010 may communicate with the outside, and the processing unit 1020 is configured to process data. The transceiver unit 1010 may also be referred to as a communication interface or a transceiver unit. The processing unit 1020 may be configured to perform processing.

Optionally, the apparatus 1000 may further include a storage unit. The storage unit may be configured to store instructions and/or data. The processing unit 1020 may read the instructions and/or the data in the storage unit, to enable the apparatus to implement the foregoing method embodiment.

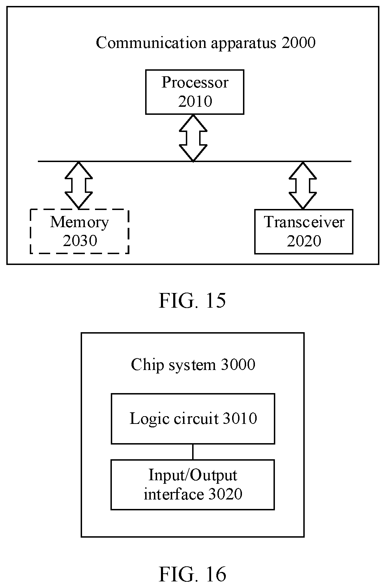

For example, the communication apparatus 1000 is a first communication apparatus, and may be a terminal device, or may be a communication apparatus that is used in a terminal device or used together with a terminal device and that can implement a method performed by the terminal device, for example, a chip, a chip system, or a circuit. Alternatively, the communication apparatus 1000 may be a network device, or may be a communication apparatus that is used in a network device or used together with a network device and that can implement a method performed by the network device, for example, a chip, a chip system, or a circuit. For details, refer to related descriptions of a chip system shown in FIG. 16.

For example, the communication apparatus 1000 is a network device, or may be a communication apparatus that is used in a network device or used together with a network device and that can implement a method performed by the network device, for example, a chip, a chip system, or a circuit. For details, refer to related descriptions of a chip system shown in FIG. 16.

In a possible design, the apparatus 1000 may implement the steps or procedures performed by the first communication apparatus in the foregoing method embodiments. The processing unit 1020 is configured to perform the processing-related operations of the first communication apparatus in the foregoing method embodiments. The transceiver unit 1010 is configured to perform the receiving/sending-related operations of the first communication apparatus in the foregoing method embodiments.

For example, the transceiver unit 1010 is configured to receive priority information from a network device, where the priority information indicates at least one of the following: a priority of each of a plurality of service types, a priority of each of a plurality of service layers, a priority of each of a plurality of service modules, and a priority of each of a plurality of service instances. The processing unit 1020 is configured to determine at least one service instance #a from a plurality of service instances based on the priority information, and process a service instance #a by using a resource #a, where the resource #a is used to process the plurality of service instances.

For example, the transceiver unit 1010 is further configured to receive mapping relationship information from a network device. The processing unit 1020 is configured to determine a service instance #A from a plurality of service instances based on the mapping relationship information and a resource #A in at least one resource.

In another possible design, the apparatus 1000 may implement steps or procedures performed by the network device in the foregoing method embodiments. The transceiver unit 1010 is configured to perform the receiving/sending-related operations of the network device in the foregoing method embodiments. The processing unit 1020 is configured to perform the processing-related operations of the network device in the foregoing method embodiments.

For example, the transceiver unit 1010 is configured to send priority information to a first communication apparatus, where the priority information indicates at least one of the following: a priority of each of a plurality of service types, a priority of each of a plurality of service layers, a priority of each of a plurality of service modules, and a priority of each of a plurality of service instances.

For example, the transceiver unit 1010 is configured to send mapping relationship information to a first communication apparatus.

It should be understood that the device 1000 herein is implemented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art can understand that the device 1000 may be specifically the transmit end in the foregoing embodiments, and may be configured to perform the procedures and/or steps corresponding to the transmit end in the foregoing method embodiments; or the device 1000 may be specifically the receive end in the foregoing embodiments, and may be configured to perform the procedures and/or steps corresponding to the receive end in the foregoing method embodiments. To avoid repetition, details are not described herein again.

The device 1000 in the foregoing solutions has a function of implementing the corresponding steps performed by the transmit end in the foregoing methods. Alternatively, the device 1000 in the foregoing solutions has a function of implementing the corresponding steps performed by the receive end in the foregoing methods. The function may be implemented by hardware, or may be implemented by hardware executing corresponding software. The hardware or the software includes one or more modules corresponding to the foregoing functions. For example, the transceiver unit may be replaced by a transceiver machine (for example, a sending unit in the transceiver unit may be replaced by a transmitter machine, and a receiving unit in the transceiver unit may be replaced by a receiver machine), and another unit, for example, the processing unit, may be replaced by a processor, to separately perform receiving and sending operations and related processing operations in the foregoing method embodiments.

In addition, the transceiver unit may alternatively be a transceiver circuit (for example, may include a receiving circuit and a sending circuit), and the processing unit may be a processing circuit. In embodiments of this application, the communication apparatus may be the receive end or the transmit end in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 15 is a block diagram of a communication apparatus 2000 according to an embodiment of this application. As shown in FIG. 15, the apparatus 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the apparatus 2000 may further include a memory 2030. The memory 2030 communicates with the processor 2010 and the transceiver 2020 through the internal connection path. The memory 2030 is configured to store the instructions. The processor 2010 may execute the instructions stored in the memory 2030.

For example, the communication apparatus 2000 is a terminal device, or may be a communication apparatus that is used in a terminal device or used together with a terminal device and that can implement a method performed by the terminal device, for example, a chip, a chip system, or a circuit. For details, refer to related descriptions of a chip system shown in FIG. 16.

For example, the communication apparatus 2000 is a network device, or may be a communication apparatus that is used in a network device or used together with a network device and that can implement a method performed by the network device, for example, a chip, a chip system, or a circuit. For details, refer to related descriptions of a chip system shown in FIG. 16.

In a possible implementation, the apparatus 2000 is configured to implement the procedures and steps corresponding to the terminal device in the foregoing method embodiments.

In another possible implementation, the apparatus 2000 is configured to implement the procedures and steps corresponding to the network device in the foregoing method embodiments.

Optionally, the memory 2030 may include a read-only memory and a random access memory, and provide instructions and data to the processor. A part of the memory may further include a non-volatile random access memory. For example, the memory may further store information of a device type. The processor 2010 may be configured to execute the instructions stored in the memory. When the processor 2010 executes the instructions stored in the memory, the processor 2010 is configured to perform the steps and/or procedures in the foregoing method embodiments corresponding to the transmit end or the receive end.

In an implementation process, the steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, like a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that the processor in embodiments of this application may be an integrated circuit chip, and has a signal processing capability. In an implementation process, the steps in the foregoing method embodiments can be implemented by using a hardware integrated logical circuit in the processor, or by using instructions in a form of software. The processor may be a general-purpose processor, a digital signal processor, an application-specific integrated circuit, a field programmable gate array or another programmable logic device, a discrete gate or a transistor logic device, a discrete hardware component, the foregoing CPU, another general-purpose processor, a DSP, an ASIC, an FGPA or another coding-capable logic device, or a partial circuit used for a processing function in another chip. The processor in embodiments of this application may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, like a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another appropriate type.

In embodiments of this application, the foregoing method may be performed by a terminal device or a network device, or may be performed by a chip, a chip system, or a circuit of a terminal device or a network device. The chip, the chip system, or the circuit may be installed in the terminal device or the network device. The following describes a chip system of a terminal device or a network device with reference to FIG. 16.

FIG. 16 is a block diagram of a chip system 3000 according to an embodiment of this application. As shown in FIG. 16, the chip system 3000 (or may be referred to as a processing system) includes a logic circuit 3010 and an input/output interface (input/output interface) 3020.

The logic circuit 3010 may be a processing circuit in the chip system 3000. The logic circuit 3010 may be coupled and connected to a storage unit, and invoke instructions in the storage unit, to enable the chip system 3000 to implement the methods and functions in embodiments of this application. The input/output interface 3020 may be an input/output circuit in the chip system 3000, and outputs information processed by the chip system 3000, or inputs to-be-processed data or signaling information to the chip system 3000 for processing.

In a solution, the chip system 3000 is configured to implement the operations performed by the terminal device or the network device in the foregoing method embodiments.

For example, the logic circuit 3010 is configured to implement the processing-related operations performed by the terminal device in the foregoing method embodiments, for example, the processing-related operations performed by the terminal device in the foregoing embodiments. The input/output interface 3020 is configured to implement the sending-related and/or receiving-related operations performed by the terminal device in the foregoing method embodiments, for example, the sending-related and/or receiving-related operations performed by the terminal device in the foregoing embodiments.

For another example, the logic circuit 3010 is configured to implement the processing-related operations performed by the network device in the foregoing method embodiments, for example, the processing-related operations performed by the network device in the foregoing embodiments. The input/output interface 3020 is configured to implement the sending-related and/or receiving-related operations performed by the network device in the foregoing method embodiments, for example, the sending-related and/or receiving-related operations performed by the network device in the foregoing embodiments.

An embodiment of this application further provides a computer-readable storage medium. The computer-readable storage medium stores computer instructions used to implement the method performed by the terminal device or the network device in the foregoing method embodiments.

An embodiment of this application further provides a computer program product, including instructions. When the instructions are executed by a computer, the method performed by the terminal device or the network device in the foregoing method embodiments is implemented.

An embodiment of this application further provides a communication system. The communication system includes the terminal device or the network device in the foregoing embodiments.

For explanations and beneficial effect of related content in any one of the apparatuses provided above, refer to the corresponding method embodiment provided above. Details are not described herein again.

In this application, under the premise of no logical contradiction, examples may be mutually referenced. For example, methods and/or terms between method embodiments may be mutually referenced. For example, functions and/or terms between apparatus embodiments may be mutually referenced. For example, functions and/or terms between apparatus examples and method examples may be mutually referenced.

Sequence numbers of the foregoing processes do not mean execution sequences in embodiments of this application. The execution sequences of the processes should be determined based on functions and internal logic of the processes, and should not be construed as any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
determining at least one first service instance from a plurality of service instances based on priority information, wherein a service type of the plurality of service instances comprises a non-connection service type, the priority information indicates priorities of a service parameter of the plurality of service instances, and the service parameter comprises at least one of the following: a service type, a service layer, a service module, a service instance identifier, and a resource scheduling grant; and
using a first resource to process the at least one first service instance, wherein the first resource is a resource allowed to be used to process the plurality of service instances, and the processing comprises transmission and/or computing.

2. The method according to claim 1, wherein the method further comprises:
determining the plurality of service instances based on mapping relationship information and the first resource, wherein the mapping relationship information indicates a mapping relationship between a plurality of service parameters and a plurality of resources, and the service parameter of the plurality of service instances is a service parameter indicated by the mapping relationship information and corresponding to the first resource.

3. The method according to claim 2, wherein the mapping relationship information is indicated by a network device, or the mapping relationship information is predefined in a protocol.

4. The method according to any one of claims 1 to 3, wherein the resource comprises at least one of a transmission resource or a computing resource.

5. The method according to any one of claims 1 to 4, wherein the non-connection service type comprises at least one of the following:
a network computing service type, a network data processing service type, a network AI service type, or a network sensing service type.

6. The method according to any one of claims 1 to 5, wherein a service layer to which the plurality of service instances belong comprises at least one of the following:
a radio resource control RRC layer, a service data adaptation protocol SDAP layer, a physical PHY layer, a media access control MAC layer, a radio link control RLC layer, a packet data convergence protocol PDCP layer, an application APP layer, or a non-access stratum NAS.

7. The method according to any one of claims 1 to 6, wherein the service instance identifier comprises an identifier of a data radio bearer DRB carrying a service instance.

8. The method according to any one of claims 1 to 7, wherein determining the at least one first service instance from the plurality of service instances based on the priority information comprises:
determining a first service instance set from the plurality of service instances in descending order of priorities of service types, wherein the first service instance set comprises a plurality of service instances;
determining a second service instance set from the first service instance set in descending order of priorities of service layers, wherein the second service instance set comprises a plurality of service instances;
determining a third service instance set from the second service instance set in descending order of priorities of service modules, wherein the third service instance set comprises a plurality of service instances; and
determining the at least one first service instance from the third service instance set in descending order of priorities of service instance identifiers.

9. The method according to any one of claims 1 to 8, wherein determining the at least one first service instance from the plurality of service instances based on the priority information comprises:
determining the at least one first service instance from the plurality of service instances in descending order of priorities of service types to which the plurality of service instances belong; or
determining the at least one first service instance from the plurality of service instances in descending order of priorities of service layers to which the plurality of service instances belong; or
determining the at least one first service instance from the plurality of service instances in descending order of priorities of service modules to which the plurality of service instances belong; or
determining the at least one first service instance from the plurality of service instances in descending order of priorities of service instance identifiers of the plurality of service instances; or
determining the at least one first service instance from the plurality of service instances in descending order of priorities of grants to which the plurality of service instances belong.

10. The method according to any one of claims 1 to 9, wherein when the service parameter comprises resource scheduling, a priority of each resource scheduling is determined based on a first priority corresponding to the resource scheduling, and the first priority of each resource scheduling is a highest priority in service instance priorities of at least one service instance corresponding to the resource scheduling.

11. The method according to any one of claims 1 to 10, wherein determining the at least one first service instance from the plurality of service instances based on the priority information comprises:
when the plurality of service instances comprise a plurality of second service instances whose service parameter has same priorities, randomly selecting at least one service instance from the plurality of second service instances as the first service instance.

12. The method according to any one of claims 1 to 11, wherein the method is applied to a first communication apparatus, and the priority information is dedicated information of the first communication apparatus.

13. The method according to any one of claims 2 to 12, wherein the method is applied to the first communication apparatus, and the mapping relationship information is dedicated information of the first communication apparatus.

14. The method according to any one of claims 1 to 13, wherein the priority information is indicated by the network device, or the priority information is predefined in a protocol.

15. A communication method, wherein the method comprises:
sending priority information, wherein the priority information indicates priorities of a service parameter of a plurality of service instances, and the service parameter comprises at least one of the following: a service type, a service layer, a service module, a service instance identifier, and a resource scheduling grant;
the priority information is used to determine at least one first service instance from the plurality of service instances, and a service type of the plurality of service instances comprises a non-connection service type; and
a first resource is used to process the at least one first service instance, the first resource is a resource allowed to be used to process the plurality of service instances, and the processing comprises transmission and/or computing.

16. The method according to claim 15, wherein the method further comprises:
sending mapping relationship information, wherein the mapping relationship information and the first resource are used to determine the plurality of service instances, the mapping relationship information indicates a mapping relationship between a plurality of service parameters and a plurality of resources, and the service parameter of the plurality of service instances is a service parameter indicated by the mapping relationship information and corresponding to the first resource.

17. The method according to claim 15 or 16, wherein the resource comprises at least one of a transmission resource or a computing resource.

18. The method according to any one of claims 15 to 17, wherein the non-connection service type comprises at least one of the following:
a network computing service type, a network data processing service type, a network AI service type, or a network sensing service type.

19. The method according to any one of claims 15 to 18, wherein a service layer to which the plurality of service instances belong comprises at least one of the following:
a radio resource control RRC layer, a service data adaptation protocol SDAP layer, a physical PHY layer, a media access control MAC layer, a radio link control RLC layer, a packet data convergence protocol PDCP layer, an application APP layer, or a non-access stratum NAS.

20. The method according to any one of claims 15 to 19, wherein the service instance identifier comprises an identifier of a data radio bearer DRB carrying a service instance.

21. The method according to any one of claims 15 to 20, wherein that the priority information is used to determine the at least one first service instance from the plurality of service instances comprises:
the priority information is used to determine a first service instance set from the plurality of service instances in descending order of priorities of service types, wherein the first service instance set comprises a plurality of service instances; and
the priority information is used to determine a second service instance set from the first service instance set in descending order of priorities of service layers, wherein the second service instance set comprises a plurality of service instances; and
the priority information is used to determine a third service instance set from the second service instance set in descending order of priorities of service modules, wherein the third service instance set comprises a plurality of service instances; and
the priority information is used to determine the at least one first service instance from the third service instance set in descending order of priorities of service instance identifiers.

22. The method according to any one of claims 15 to 21, wherein that the priority information is used to determine the at least one first service instance from the plurality of service instances comprises:
the priority information is used to determine the at least one first service instance from the plurality of service instances in descending order of priorities of service types to which the plurality of service instances belong; or
the priority information is used to determine the at least one first service instance from the plurality of service instances in descending order of priorities of service layers to which the plurality of service instances belong; or
the priority information is used to determine the at least one first service instance from the plurality of service instances in descending order of priorities of service modules to which the plurality of service instances belong; or
the priority information is used to determine the at least one first service instance from the plurality of service instances in descending order of priorities of service instance identifiers of the plurality of service instances; or
the priority information is used to determine the at least one first service instance from the plurality of service instances in descending order of priorities of grants to which the plurality of service instances belong.

23. The method according to any one of claims 15 to 22, wherein when the service parameter comprises resource scheduling, a priority of each resource scheduling is determined based on a first priority corresponding to the resource scheduling, and the first priority of each resource scheduling is a highest priority in service instance priorities of at least one service instance corresponding to the resource scheduling.

24. The method according to any one of claims 15 to 23, wherein that the priority information is used to determine the at least one first service instance from the plurality of service instances comprises:
when the plurality of service instances comprise a plurality of second service instances whose service parameter has same priorities, the priority information is used to randomly select at least one service instance from the plurality of second service instances as the first service instance.

25. The method according to any one of claims 15 to 24, wherein the priority information is dedicated information of a first communication apparatus.

26. The method according to any one of claims 16 to 25, wherein the mapping relationship information is dedicated information of the first communication apparatus.

27. A communication apparatus, wherein the apparatus comprises a unit or a module configured to perform the method according to any one of claims 1 to 14, or the apparatus comprises a unit or a module configured to perform the method according to any one of claims 15 to 26.

28. A communication system, comprising a terminal device and a network device, wherein the terminal device is configured to perform the method according to any one of claims 1 to 14, and the network device is configured to perform the method according to any one of claims 1 to 26.

29. A computer-readable storage medium, wherein the computer-readable storage medium stores a computer program, and when the computer program is run on a computer, the computer is enabled to perform the method according to any one of claims 1 to 14, or the computer is enabled to perform the method according to any one of claims 15 to 26.

30. A computer program product, wherein the computer program product comprises computer program code, and when the computer program code is run on a communication apparatus, the apparatus is enabled to perform the method according to any one of claims 1 to 14, or the apparatus is enabled to perform the method according to any one of claims 15 to 26.
